# EUROPEAN PATENT APPLICATION

(11) **EP 1 477 335 A2**
(43) Date of publication of application: **17.11.2004**
(21) Application number: 04010470.5
(22) Date of filing: 03.05.2004
(51) Int. Cl.: B60C 23/04

(54) **Vehicle-state obtaining apparatus**

(30) Priority: 12.05.2003 JP 2003132742; 10.11.2003 JP 2003379435
(71) Applicant: TOYOTA JIDOSHA KABUSHIKI KAISHA, Aichi-ken 471-8571 (JP)
(72) Inventor: Ogawa, Atsushi, Toyota-shi Aichi-ken, 471-8571 (JP); Taki, Yuji, Toyota-shi Aichi-ken, 471-8571 (JP)
(74) Representative: Winter, Brandl, Fürniss, Hübner, Röss, Kaiser, Polte Partnerschaft

(57) **Abstract**

A vehicle-state obtaining apparatus having (a) a sensing device (10-16) including at least one sensor (50) detecting a state of a vehicle and operable to transmit, by radio communication, sensor information including the vehicle state detected by the sensor, and (b) an information processing device (38) operable to receive the sensor information and obtain the vehicle state on the basis of the received sensor information, wherein the information processing device obtains the vehicle state when it is recognized by one-way or two-way communication of key information between the information processing device and the sensing device that these two devices correspond to each other.

## Description

The present application is based on Japanese Patent Application Nos. 2003-132742 and 2003-379435 respectively filed on May 12 and November 10, 2003, the contents of which are incorporated herein by reference.

### BACKGROUND OF THE INVENTION

### Field of the Invention

The present invention relates to a vehicle-state obtaining apparatus including an information processing device arranged to obtain a state of a vehicle on the basis of sensor information transmitted from sensing devices.

### Discussion of Related Art

Examples of such a vehicle-state obtaining apparatus are disclosed in EP-1026015A2, JP-2000-233615A, JP-2002-321511A, JP-8-227492A, JP-3212311B2 and JP-10-508264A. In the vehicle-state obtaining apparatus as disclosed in these prior art documents, the sensing devices include respective wheel-side devices which are provided on respective wheels of a vehicle and which include respective air pressure sensors, while the information processing device is provided on a body of the vehicle and arranged to obtain tire air pressures of the wheels on the basis of sensor information received from the wheel-side devices.

EP-10260152A2 discloses an apparatus wherein a body-side device provided on the vehicle body includes a plurality of transceiver devices which correspond to respective wheel-side devices provided on the respective vehicle wheels and which are operable to transmit air-pressure-data request signals to the wheel-side devices, and each wheel-side device is operable to transmit air-pressure data in response to the air-pressure-data request signal received from the corresponding transceiver device.

JP-2000-233615A discloses an apparatus wherein when a body-side device provided on the vehicle body registers sets of wheel identification data identifying respective wheel-side devices provided on the respective vehicle wheels, each wheel-side device transmits its identification data to the body-side device a predetermined number of times, so that the body-side device registers the wheel identification data sets for the wheel-side devices, in the order of a ratio of reception of the wheel identification data by the body-side device from the wheel-side devices.

JP-2002-321511A discloses an apparatus wherein when the body-side device receives from any wheel-side device wheel identification data not registered therein, the body-side device registers this wheel identification data as data identifying the wheel which has been newly installed at a given position in place of one of the wheels the identification data of which have been registered.

JP-8-227492A discloses an apparatus wherein each wheel-side device is arranged to transmit to the body-side device the sensor information together with its identification data, and JP-3212311B2 discloses an apparatus wherein the body-side device is arranged to transmit to each wheel-side device an identification-data request signal requesting the wheel-side device to transmit its identification data, while JP-10-508264A discloses an apparatus wherein the body-side device is arranged to obtain the air pressure of each wheel at a predetermined frequency.

### SUMMARY OF THE INVENTION

It is an object of the present invention to provide a vehicle-state obtaining apparatus capable of obtaining a state of a vehicle with high accuracy.

The object indicated above may be achieved according to any one of the following modes of this invention, each of which is numbered like the appended claims and depends from the other mode or modes, where appropriate, for easier understanding of technical features disclosed in the present application, and possible combinations of those features. However, it is to be understood that the invention is not limited to those technical features or combinations thereof, and that any one of a plurality of technical features described below with respect to any one mode of the invention may be a subject matter of this invention, without the other technical feature or features being combined with that one feature.

(1) A vehicle-state obtaining apparatus comprising:
a sensing device including at least one sensor to detect a state of at least a portion of a vehicle, and operable to transmit, by radio communication, sensor information including the state detected by the at least one sensor; and
an information processing device operable to receive the sensor information and obtain the state of the vehicle on the basis of the received sensor information,
wherein the information processing device comprises an initiating portion which initiates an operation to obtain the state of the vehicle when it is recognized by one-way or two-way communication of key information between the information processing device and the sensing device that the sensing device and the information processing device correspond to each other.

The sensing device includes at least one sensor, namely, only one sensor or a plurality of sensors.

The at least one sensor is arranged to detect a state of at least one portion of the vehicle, and may include, for example, a sensor operable to detect a state of a wheel of the vehicle, or a sensor operable to detect a state of a suspension device, a wheel drive device, a braking device or a steering device. Further, the at least one sensor may include a sensor operable to detect a running condition of the vehicle, for example, a running speed, a vertical, longitudinal or lateral acceleration, a yaw rate or a pitch rate of the vehicle, or an environmental condition of the vehicle, for example, an ambient temperature or humidity, or an atmospheric pressure. The sensing device may be arranged to detect a relative position between the vehicle in question and another vehicle, for instance, a vehicle in front of the vehicle in question. The above-indicated environmental condition and the relative position are considered to be a state of the vehicle in question as a whole.

The sensor information obtained by the sensing device is transmitted to the information processing device, by radio communication. Where a sensor is provided on a wheel or any other rotary member of the vehicle, or is relatively distant from the information processing device, electrical connection of the sensor to the information processing device by signal wires is impossible or difficult. In this case, the present vehicle-state obtaining apparatus is effectively used owing to its capability of radio communication between the sensing device and the information processing device. In this respect, the sensing device may be referred to as a remote device with respect to the information processing device.

The present vehicle-state obtaining apparatus may include a plurality of sensing devices or only one sensing device, for the information processing device. Where only one sensing device is provided on the vehicle provided with the information processing device, this sensing device and the information processing device are considered to correspond to each other, within the meaning of the present invention. In other words, any sensing device provided on another vehicle is not considered to correspond to the information processing device of the vehicle in question. Where a plurality of sensing devices are provided on the vehicle, each of the sensing devices is considered to correspond to the information processing device, when a predetermined relationship between each sensing device and the information processing device is satisfied or established, or when each sensing device is specified by the information processing device, as the corresponding device, namely, as the sensing device which is requested by the information processing device to transmit the sensor information.

The "key information" is used to check if the sensing device and the information processing device correspond to each other or match each other, as if a key and a lock match each other. Although one set of key information itself does not function to effect a matching check, this set of key information make it possible to recognize that the sensing device and the information processing device correspond to each other, when the above-indicated set of key information is combined with at least one other set of key information, or changed according to a known rule into another set of key information to be transmitted in response to the original set of key information.

By communication of the key information between the sensing device and the information processing device, the vehicle-state obtaining apparatus can determine whether these two devices correspond to each other, so that the information processing device can obtain the vehicle state on the basis of the sensor information transmitted from the corresponding or desired sensing device, with a high degree of reliability. By using the key information, the sensing device need not be identified by its identification data stored therein. Further, the communication of the key information assures a lower probability of erroneous mutual identification of the two devices, and an accordingly lower probability of erroneous reception of the sensor information by the information processing device from the sensing device which is not specified or requested to transmit the sensor information.

(2) The vehicle-state obtaining apparatus according to the above mode (1), wherein at least one of the sensing device and the information processing device includes a key-information transmitting portion which changes at least one of a previously transmitted set of key information and a presently received set of key information according to a predetermined information changing rule, and transmits the changed set of key information.

In one arrangement of the above mode (2) of the invention, the key information presently received by one of the sensing device and the information processing device is changed by this one device according to the predetermined rule and the changed key information is transmitted to the other device, while the key information presently received by this other device is changed by this other device according to the predetermined rule and the changed key information is transmitted to the above-indicated one device. In another arrangement, the key information previously transmitted from a predetermined one of the two devices is changed by this one device according to the predetermined rule and the changed key information is transmitted to the other device. The information changing rule may be formulated to change the content or value of the key information or the frequency of the key information.

(3) The vehicle-state obtaining apparatus according to the above mode (2), wherein at least one of the sensing device and the information processing device includes a recognizing portion operable to recognize, on the basis of at least the predetermined information changing rule, that the sensing device and the information processing device correspond to each other.

(4) The vehicle-state obtaining apparatus according to the above mode (3), wherein the initiating portion initiates the operation to obtain the state of the vehicle when the recognizing portion has recognized that the sensing device and the information processing device correspond to each other.

The one-way or two-way communication of the key information is effected between the sensing device and the information processing device, so that at least one of these two devices recognizes on the basis of at least the information changing rule that the two devices correspond to each other.

Where the two way communication of the key information is effected between the sensing device and the information processing device, for example, the information changing rule used by one of the two devices may be known to the other device, and vice versa. In this case, one of the two devices which has transmitted the key information to the other device can forecast the key information expected to receive from the other device, on the basis of the transmitted key information (or the key information presently received by the other device) and the information changing rule used by the other device. When the key information presently received by the above-indicated one device is identical with the forecast key information, that device can recognize that the two devices correspond to each other.

Where each set of key information presently received by one of the sensing device and the information processing device is changed and the changed set of key information is transmitted to the other device, the other device can estimate the information changing rule on the basis of a plurality of sets of key information received by the other device. If the thus estimated rule is identical with the rule used by the above-indicated one device, which rule is known to the other device, this other device can recognize that the two devices correspond to each other. The other device can also forecast the key information expected to receive from the one device, in the same manner as described above, so that the other device can recognize that the two devices correspond to each other, if the key information actually received by the other device is identical with the thus forecast key information.

Where the key information presently received by one of the sensing device and the information processing device is changed and the changed set of key information is transmitted to the other device, and where the information changing rule used by the above-indicated one device is known to the other device, this other device can make a determination as to whether the two devices correspond to each other, on the basis of two or more sets of key information received by the other device and the information changing rule. Where this other device is arranged to inform the above-indicated one device as to whether the two devices correspond to each other, the above-indicated one device can know whether the two devices correspond to each other or not. Alternatively, the above-indicated other device may be arranged to transmit to the one device rule information indicative of an information changing rule, as well as the key information, so that the one device changes the received key information according to the rule indicated by the received rule information, and transmits the thus changed key information to the other device, when the one device recognizes that the two devices correspond to each other. This arrangement is effective where the above-indicated other device is arranged to store the initial value of the key information (namely, the content of the key information transmitted last from the other device).

(5) The vehicle-state obtaining apparatus according to any one of the above modes (1)-(4), wherein each of the sensing device and the information processing device includes a receiving portion operable to receive the key information, a changing portion operable to change the received key information according to a predetermined information changing rule, and a transmitting portion operable to transmit the key information changed by the changing portion.

In the vehicle-state apparatus according to the above mode (5), the sensing device and the information processing device are both capable of changing the key information and transmitting the changed key information.

(6) The vehicle-state obtaining apparatus according to the above mode (5), wherein the changing portion of the sensing device and the changing portion of the information processing device change the key information according to predetermined information changing rules which are known to both of the changing portions of the sensing device and the information processing device.

Where the predetermined information changing rules respectively used by the sensing device and the information processing device are known to the information processing device and the sensing device, respectively, each of these devices can forecast the key information expected to receive from the other device, and can recognize that the two devices correspond to each other, when the key information actually received by each device is identical with the forecast key information. The changing portions of the sensing device and the information processing device may use the same information changing rule, or respective different information changing rules, provided that the same rule or the different rules is/are known to both of the two devices.

(7) The vehicle-state obtaining apparatus according to the above mode (5) or (6), wherein the changing portion of the sensing device and the changing portion of the information processing device change the key information according to a predetermined same information changing rule.

In the vehicle-state obtaining apparatus according to the above mode (7), the same information changing rule is used by the changing portions of the sensing device and the information processing device that are provided on the same vehicle.

(8) The vehicle-state obtaining apparatus according to any one of the above modes (3)-(7), wherein the information processing device includes the recognizing portion, and is operable to obtain the state of the vehicle on the basis of the sensor information, when the recognizing portion has recognized that the sensing device and the information processing device correspond to each other, the information processing device being inoperable to obtain the state of the vehicle when the recognizing portion has recognized that the sensing device and the information processing device do not correspond to each other.

(9) The vehicle-state obtaining apparatus according to the above mode (8), wherein the sensing device includes the above-indicated key-information transmitting portion, and a sensor-information transmitting portion operable to transmit the sensor information together with the changed set of key information.

The information processing device obtains the state of the vehicle on the basis of the sensor information, when its recognizing device has recognized that the information processing device and the sensing device correspond to each other, and does not obtain the state of the vehicle when the recognizing device has not recognized that the two devices correspond to each other. Accordingly, the information processing device is prevented from obtaining the vehicle state on the basis of the sensor information transmitted from the sensing device not corresponding to the information processing device.

(10) The vehicle-state obtaining apparatus according to any one of the above modes (3)-(9), wherein the sensing device includes the recognizing portion, and is operable to transmit the sensor information, when the recognizing portion has recognized that the sensing device and the information processing device correspond to each other, the sensing device being inoperable to transmit the sensor information, when the recognizing portion has not recognized that the sensing device and the information processing device correspond to each other.

(11) The vehicle-state obtaining apparatus according to the above mode (10), wherein the information processing device includes the key-information transmitting portion, and a request-signal transmitting portion operable to transmit, together with the changed set of key information, a request signal requesting the sensing device to transmit the sensor information.

The sensing device transmits the sensor information when its recognizing device has recognized that the sensing device and the information processing device correspond to each other, and does not transmit the sensor information when the recognizing device has not recognized that the two devices correspond to each other.. Accordingly, the sensing device is prevented from transmitting the sensor information in response to a request signal received from the information processing device of a vehicle other than the vehicle in question, or a request signal addressed to another sensor device.

(12) The vehicle-state obtaining apparatus according to any one of the above modes (3)-(11), wherein the sensing device includes the key-information transmitting portion, and a changing portion operable to change a previously transmitted set of key information according to the predetermined information changing rule, and transmit the changed set of key information, and the information processing device includes the recognizing portion, the recognizing portion recognizing, on the basis of at least a plurality of sets of key information received from the sensing device, that the sensing device corresponds to the information processing device.

The information processing device receives a plurality of sets of key information transmitted from the sensing device. On the basis of the received key information sets, the information processing device can estimate the information changing rule used by the sensing device. Namely, the information processing device can make a determination as to whether the sensing device corresponds to the information processing device, by comparing the thus estimated rule with the information changing rule which is stored in the information processing device, as the rule used by the sensing device.

(13) The vehicle-state obtaining apparatus according to any one of the above modes (3)-(12), wherein the sensing device includes the key-information transmitting portion, and a changing portion operable to change a previously transmitted set of key information according to the predetermined information changing rule, and transmit the changed set of key information, and the information processing device includes a rule-obtaining portion operable to obtain the predetermined information changing rule used by the changing portion of the sensing device, on the basis of a plurality of sets of key information received from the sensing device.

On the basis of the changed sets of key information received from the sensing device, the information processing device can estimate the information changing rule used by the sensing device. The thus estimated information changing rule may be stored in the information processing device.

In a normal operation of the vehicle-state obtaining apparatus, the sensor information is transmitted from the sensing device, and the information processing device obtains the state of the vehicle on the basis of the received sensor information. In an initial setting or registering operation of the apparatus, appropriate kinds of information are registered to correlate the information processing device and the sensing device, or to check whether these two devices correspond to each other. The normal operation to obtain the vehicle state may be referred to as a vehicle-state obtaining operation or mode. On the other hand, the initial setting or registering operation to correlate the sensing device and the information processing device may be referred to as a correlating operation or mode. In the vehicle-state obtaining apparatus according to the above mode (13), the operation of the information processing device to obtain or estimate the information changing rule on the basis of the key information received from the sensing device is preferably implemented in the registering mode.

(14) The vehicle-state obtaining apparatus according to any one of the above modes (1)-(13), wherein the sensing device is provided on each of a plurality of wheels of the vehicle, and the at least one sensor includes at least one sensor operable to detect a state of the corresponding wheel, the senor information transmitted by the sensing device includes the detected state of the corresponding wheel.

The at least one sensor provided to detect the state of the vehicle wheel may include; a rotary motion sensor arranged to detect a state of rotation of the wheel, such as the rotating speed or rotary acceleration of the wheel; or a tire state sensor arranged to detect a state of a tire of the wheel, such as the air pressure or temperature of the wheel tire; or a force sensor arranged to detect at least one of forces acting on the wheel in the vertical, longitudinal and lateral directions of the vehicle. Those sensors may be sensors arranged to detect the absolute value of such physical quantities, or may be switches or other sensors arranged to determine whether the physical quantities are larger than predetermined threshold values, for determining whether the wheel state as represented by each of those physical quantities is normal or adequate.

(15) The vehicle-state obtaining apparatus according to the above mode (14), wherein the information processing device is provided on a body of the vehicle, and includes a wheel-state obtaining portion operable to obtain the state of the corresponding wheel on the basis of the sensor information transmitted from the sensing devices.

In the vehicle-state obtaining apparatus according to the above modes (14) and (15), the sensing devices are provided on the respective wheels of the vehicle, to obtain the states of the respective wheels. All of these sensing devices provided on the respective wheels may correspond to the information processing device provided on the same vehicle body, or each of those sensing devices may correspond to the information processing device when each sensing device is requested by the information processing device to transmit the sensor information.

(16) A vehicle-state obtaining device comprising:
a plurality of wheel-side devices provided on a plurality of wheels of a vehicle, respectively, each of the wheel-side devices including at least one sensor to detect a state of a corresponding one of the wheels, each wheel-side device being operable to transmit wheel information including the state of the corresponding wheel detected by the at least one sensor; and
a body-side device provided on a body of the vehicle and including an information processing device operable to obtain the states of the plurality of wheels on the basis of the wheel information transmitted by the plurality of wheel-side devices, wherein two-way communication of information is effected between the plurality of wheel-side devices and the body-side device,
wherein the body-side device includes a plurality of body-side transmitting portions which are provided for the plurality of wheels, respectively, and which transmit respective different kinds of information, and each of the plurality of wheel-side devices is operable to generate reception-state information indicative of a state of reception of at least one of the different kinds of information transmitted by at least one of the body-side transmitting portions, each wheel-side device including a reception-state-information transmitting portion operable to transmit the generated reception-state information.

Some of the technical features of the above-described modes (1)-(15) of this invention are applicable to the vehicle-state obtaining apparatus constructed according to the mode (16) of the invention described just above, or vice versa. For example, the principle of the above mode (16) of the invention is applicable to a vehicle-state obtaining apparatus according to any one of the above modes (1)-(15), which is modified such that the information processing device is arranged to receive wheel information from a plurality of sensing devices in the form of the wheel-side devices provided in the above mode (16).

(17) The vehicle-state obtaining apparatus according to the above mode (16), wherein the information processing device includes a relative-position obtaining portion operable to obtain a position of each of the wheel-side devices relative to the body of the vehicle on the basis of the reception-state information transmitted from the reception-state-information transmitting portion.

In the vehicle-state obtaining apparatus according to the above mode (16) of the invention, the body-side device includes the body-side transmitting portions provided for the respective wheel-side devices. Each of the body-side transmitting portions is preferably disposed at a portion of the vehicle body which is located near the corresponding wheel. However, the body-side transmitting portions need not be located near the respective wheels, provided that the body-side transmitting portions are located such that the information transmitted from each body-side transmitting portion is received by only the corresponding wheel-side device, but not received by the other wheel-side devices. For instance, each body-side transmitting portion may be located on the vehicle body such that a distance between this body-side transmitting portion and the corresponding wheel-side device is smaller than distances between the other body-side transmitting portions and the corresponding wheel-side devices.

The wheel-side devices are provided on the right and left front wheels and the right and left rear wheels, respectively, where the vehicle has four wheels. In this case, the body-side transmitting portions are provided for the respective four wheel-side devices, to transmit the respective different kinds of information. In this respect, the different kinds of information transmitted from the respective body-side transmitting portions may be referred to as relative-position data or simply as position data, which relate to the relative positions of the four portions of the vehicle body which corresponds to the respective wheel-side devices. In other words, the different kinds of information to be transmitted from the respective body-side transmitting portions may be relative-position data indicative of the positions of the wheel-side devices relative to each other. In the following description of the above modes (16) and (17), the different kinds of information transmitted from the body-side transmitting portions will be referred to simply as the position data.

The position information transmitted from one of the body-side transmitting portions may be received by not only the corresponding wheel-side device, but also the other wheel-side device or devices. In other words, each of the wheel-side devices may receive a plurality of different kinds of position data transmitted by the two or more body-side transmitting portions. Where the position data are transmitted a predetermined number of times from each other the body-side transmitting portions with the same transmission intensity, the number of receptions of the position data by each wheel-side device from the corresponding nearest wheel-side device is theoretically larger than those of the position data from the other wheel-side devices. That is, each wheel-side device is expected to have the highest ratio (highest probability) of reception of the position data from the corresponding nearest wheel-side device. Therefore, each wheel-side device is considered to correspond to the body-side transmitting portion the position data of which have been received with the highest ratio of reception by that wheel-side device.

In view of the above, each of the wheel-side device in the apparatus according to the above mode (16) is arranged to obtain the state of reception of the position data from each of the body-side transmitting portions, generate the reception-state information indicative of the obtained state of reception of the position data, and transmit the generated reception-state information to the body-side device. On the basis of the received reception-state information, the body-side device correlates the wheel-side devices with the different kinds of position data (body-side transmitting portions). In one preferred form of the vehicle-state obtaining apparatus according to the above mode (17), the information processing device of the body-side device includes the relative-position obtaining portion operable to obtain the position of each of the wheel-side devices relative to the body of the vehicle on the basis of the reception-state information transmitted from the reception-state-information transmitting portion of the wheel-side device. The different kinds of position information to be transmitted by the respective body-side transmitting portions are generally stored in the information processing device of the body-side device, in relation to the body-side transmitting portion. In this case, the accuracy of correlation of the stored different kinds of position data with the wheel-side devices can be checked on the basis of the reception-state information received from the reception-state-information transmitting portions of the wheel-side devices.

The state of reception of the position data by each wheel-side device may be represented by the number of receptions of the position data, or the ratio or intensity of reception of the position data. The reception-state information may indicate the state of reception of the position data from each of the body-side transmitting portions, or indicate the position data from one of the transmitting portions, which position data have the highest ratio or intensity of reception by the wheel-side device in question.

In the vehicle-state obtaining apparatus according to the above mode (17) wherein the body-side device includes the relative-position obtaining portion, the information processing portion of the body-side device can correlate the wheel-side devices and the body-side transmitting portions (different kinds of position data) with each other, with a high degree of accuracy, making it possible to prevent erroneous detection of the state of a vehicle wheel on the basis of the wheel information received from the wheel-side device not corresponding to the wheel in question. The present apparatus assures highly reliable detection of the state of the desired wheel on the basis of the wheel information received from the corresponding wheel-side device.

(18) The vehicle-state obtaining apparatus according to the above mode (16) or (17), wherein each of the wheel-side devices includes a receiving portion operable to receive the information from at least one of the body-side transmitting portions, a received-information memory portion for storing the information received by the receiving portion, and a reception-state-information generating portion operable to generate the reception-state information on the basis of the information stored in the received-information memory portion, the reception-state-information transmitting portion transmitting the reception-state information generated by the reception-state-information generating portion.

(19) The vehicle-state obtaining apparatus according to any one of the above modes (16)-(18), wherein each of the wheel-side devices includes an identification-data transmitting portion operable to transmit identification data identifying each wheel-side device, such that the identification data are transmitted together with the reception-state information transmitted by the reception-state-information transmitting portion.

Where identification data identifying each wheel-side device are stored in each wheel-side device, the identification data are preferably transmitted together with the reception-state information, so that the body-side device can correlate each wheel-side device and the position data. On the basis of the received identification data, the body-side device can correctly receive the information of the desired wheel identified by the identification data.

However, the identification data need not be stored in each wheel-side device. Namely, when the reception-state information received from each wheel-side device indicates that the position data transmitted from each of the respective body-side transmitting portions of the body-side device have been received by only one of the wheel-side devices, it is possible to determine that the body-side transmitting portion in question corresponds to the above-indicated one of the wheel-side devices, namely, possible to determine that the position data are correctly stored in the body-side device, in relation to the corresponding body-side transmitting portion.

(20) The vehicle-state obtaining apparatus according to any one of the above modes (16)-(19), wherein the information processing device of the body-side device includes a transmission control portion operable to control at least one of the body-side transmitting portions (30-36), on the basis of the reception-state information transmitted by the reception-state-information transmitting portion of each wheel-side device.

(21) The vehicle-state obtaining apparatus according to the above mode (20), wherein the transmission control portion includes a transmission-state changing portion operable to change at least one of: a transmission intensity of the above-indicted at least one body-side transmitting portion; a frequency of the information to be transmitted from the above-indicated at least one body-side transmitting portion; a pattern of transmission of the information from each of the at least one body-side transmitting portion; and a frequency at which the information is transmitted by each of the at least one body-side transmitting portion.

Since the body-side transmitting portions are provided for the respective wheel-side devices, it is possible to arrange the relationships between the body-side transmitting portions and the wheel-side devices such that the position data transmitted from each of the body-side transmitting portions can be received by only the corresponding wheel-side device and cannot be received by the other wheel-side devices. When the position data transmitted by any one of the body-side transmitting portions have been received with the highest reception ratio by two or more wheel-side devices, for example, the state of transmission of the position data from that body-side transmitting portion is changed by the transmission control portion so that the position data transmitted from one body-side transmitting portion are received by only the corresponding wheel-side device with the highest reception ratio.

The pattern of transmission of the information to be transmitted by each body-side transmitting portion is determined by the kind or length of a series of information to be transmitted, the arrangement of the information, etc. An increase in the length of the information causes a decrease in the ratio of reception of the information by the wheel-side device or devices located relatively distant from the body-side transmitting portion in question.

A change in the frequency of the information to be transmitted causes an increase the ratio of reception of the information by the wheel-side device which has a specific positional relationship with the body-side transmitting portion in question. A decrease in the transmission intensity of the information causes a decrease in the ratio of reception of the information by the wheel-side device or devices located relatively distant from the body-side transmitting portion in question.

(22) The vehicle-state obtaining apparatus according to the above mode (20) or (21), wherein each of the plurality of wheel-side devices further includes a highest-reception-ratio-information generating portion operable to generate, as the reception-state information to be transmitted by the reception-state-information transmitting portion, highest-reception-ratio information indicating one of the different kinds of information which has been received by each wheel-side device with a highest ratio of reception among the different kinds, the information processing device of the body-side device further including a transmission-intensity control portion which is operable, when the highest-reception-ratio information indicates that any one of the different kinds of information has been received with the highest ratio of reception by at least two of the wheel-side devices, to reduce a transmission intensity of one of the body-side transmitting portions which has transmitted the above-indicated any one of the different kinds of information, the transmission-intensity control portion being further operable, when the highest-reception-ratio information indicates that any one of the different kinds of information has not been received with the highest ratio of reception by any of the wheel-side devices, to increase a transmission intensity of one of the body-side transmitting portions which has transmitted the above-indicated any one of said different kinds of information which has not been received with the highest ratio of reception by any of the wheel-side devices.

The different kinds of information to be transmitted from the respective body-side transmitting portions of the body-side device may be different kinds of position data indicative of the positions of the respective vehicle wheels. Since the position data transmitted from each body-side transmitting portion is known to the information processing device of the body-side device, the information processing device can recognize, on the basis of the received highest-reception-ratio information, whether any of the different kinds of position data transmitted from any of the body-side transmitting portions has not been received with the highest reception ratio by any of the wheel-side devices.

(23) The vehicle-state obtaining apparatus according to any one of the above modes (16)-(22), wherein each of the wheel-side devices obtains a ratio of reception of each of the above-indicated at least one of the different kinds of information transmitted by the above-indicated at least one of the body-side transmitting portions, and includes a received-information memory portion for storing one of the different kinds of information which has been received with a highest ratio of reception by each wheel-side device among the different kinds.

Since the different kinds of information are transmitted by the respective body-side transmitting portions, the transmitted different kinds of information can be correlated with the respective wheel-side devices. Where the different kinds of information to be transmitted from the body-side transmitting portions are registered in the wheel-side devices, each wheel-side device can recognize whether the received kind of information is identical with the registered information, and can correlate the received kind of information with the corresponding wheel-side transmitting portion.

Where the information to be transmitted from each body-side transmitting portion is key information, and where each wheel-side device is arranged to change the received key information and transmit the changed key information, the initial value of the key information received by each wheel-side device may be stored in the wheel-side device. Alternatively, the information to be transmitted from each body-side transmitting portion may be identification data identifying each wheel-side device, or specifying information specifying each wheel-side device from which the wheel information is to be transmitted to the body-side device.

(24) A vehicle-state obtaining apparatus comprising:
a plurality of wheel-side devices provided on a plurality of wheels of a vehicle, respectively, each of the wheel-side devices including a sensor to detect a state of a corresponding one of the wheels, each wheel-side device being operable to transmit wheel information including the state of the corresponding wheel detected by the sensor; and
a body-side device provided on a body of the vehicle and including an information processing device operable to obtain the states of the plurality of wheels on the basis of the wheel information transmitted by the plurality of wheel-side devices, wherein two-way communication of information is effected between the plurality of wheel-side devices and the body-side device,
wherein the body-side device includes a plurality of body-side transceiver portions which are provided for the plurality of wheels, respectively, and a transmission control portion operable to sequentially operate the plurality of body-side transceiver portions such that when information is transmitted by each one of the body-side transceiver devices, no information is transmitted by the other of the body-side transceiver portions,
each of the plurality of wheel-side devices including an answering-information transmitting portion operable to transmit answering information corresponding to the information received from the body-side transceiver devices,
the information processing device of the body-side device including a relative-position obtaining portion operable to obtain a position of each of the wheel-side devices relative to the body of the vehicle on the basis of the answering information as received from the answering-information transmitting portion.

In the vehicle-state obtaining apparatus according to the above mode (24), each of the wheel-side devices is arranged to transmit the answering information corresponding to the received information. The answering information may be the same as the received information, or information obtained by changing the received information. In either of these cases, the answering information which corresponds to the received information enables the body-side device to recognize the state of reception of the information from the body-side transceiver portions by each wheel-side device. In the vehicle-state obtaining apparatus according to the above mode (24), the position of each wheel-side device to the vehicle body can be accurately detected, so that the information of the wheel located at the desired location can be obtained with high reliability.

Some of the technical features of the above-described modes (1)-(23) of this invention are applicable to the vehicle-state obtaining apparatus constructed according to the mode (24) of the invention described just above, or vice versa. For example, the principle of the above mode (24) of the invention is applicable to a vehicle-state obtaining apparatus according to any one of the above modes (1)-(15), which is modified such that the information processing device is arranged to receive wheel information from a plurality of sensing devices in the form of the wheel-side devices provided in the above mode (24). The information transmitted between each wheel-side device and the body-side device may be key information or position-data-related information relating to position data described above with respect to the above mode (16).

(25) The vehicle-state obtaining apparatus according to the above mode (24), wherein the information processing device of the body-side device includes a transmission-reception-state control portion operable when the information processing device has received the answering information from at least two devices of the plurality of wheel-side devices in response to the information transmitted from one of the body-side transceiver portions, the transmission-reception-state control portion reducing at least one of a transmission intensity and a reception sensitivity of the above-indicated one body-side transceiver portion, until the information processing device receives the answering information from only one of the plurality of wheel-side devices.

When the information transmitted from one of the body-side transceiver portions is received by the two or more wheel-side devices, the answering information is transmitted from those two or more wheel-side devices. In this case, the transmission intensity of the body-side transceiver portion is reduced, to reduce the number of the wheel-side devices which can receive the information from the body-side transceiver portion in question and from which the answering information is transmitted to the body-side device. The number of the wheel-side devices from which the answering information can be received by the information processing device of the body-side device can be reduced, by reducing the reception sensitivity of the body-side transceiver portion in question.

(26) The vehicle-state obtaining apparatus according to the above mode (25), wherein the transmission-reception-state control portion gradually reduces at least one of the transmission intensity and the reception sensitivity of the above-indicated one body-side transceiver portion.

(27) The vehicle-state obtaining apparatus according to any one of the above modes (24)-(26), wherein the answering-information transmitting portion changes the information received from each of the body-side transceiver portions, into the answering information, according to a predetermined information changing rule, and the information processing device of the body-side device includes a changed-information transmitting portion operable to change the answering information according to a predetermined information changing rule and transmit the changed answering information.

In the vehicle-state obtaining apparatus according to the above mode (27), the operation to correlate the body-side transceiver portions of the body-side device and the wheel-side devices with each other is performed in a registering mode by controlling the body-side transceiver portions to transmit the initial information or changed answering information, and controlling the wheel-side devices to transmit the answering information.

(28) The vehicle-state obtaining apparatus according to the above mode (27), wherein the information processing device of said body-side device includes an answering-information memory portion operable when the information processing device has received the answering information from only one of the plurality of wheel-side devices in response to the information transmitted from one of the body-side transceiver portions, the answering-information memory portion storing therein the received answering information in relation to the above-indicated one body-side transceiver portion.

(29) The vehicle-state obtaining apparatus according to the above mode (28), wherein at least one of each of said plurality of wheel-side devices and the information processing device includes an answering-information-transmission inhibiting portion which is operable, when the answering information has been stored in the answering-information memory portion, to inhibit subsequent transmission of the answering information from the above-indicated one wheel-side device.

When the answering information is stored in the answering-information memory portion in the registering mode, as the initial value of the information to be transmitted in a normal operation of the apparatus. In this case, the wheel-side device in question is prevented from subsequently transmitting the answering information, to prevent a change of the determined initial value.

For example, the information processing device is preferably arranged to transmit information indicating that the initial value of the information to be transmitted to each wheel-side device has been determined, whereby the wheel-side device is commanded not to subsequently transmit the answering information.

(30) A vehicle-state obtaining apparatus comprising:
a plurality of wheel-side devices provided on a plurality of wheels of a vehicle, respectively, each of the wheel-side devices including a sensor to detect a state of a corresponding one of the wheels, each wheel-side device being operable to transmit wheel information including the state of the corresponding wheel detected by the sensor; and
a body-side device provided on a body of the vehicle and including an information processing device operable to obtain the states of the plurality of wheels on the basis of the wheel information transmitted by the plurality of wheel-side devices,
wherein the body-side device includes a request-signal transmitting portion operable to transmit different kinds of specifying information corresponding to the plurality of wheel-side devices, respectively, and a request signal requesting each of the wheel-side devices to transmit the wheel information,
and wherein each of the plurality of wheel-side devices includes a wheel-information transmitting portion operable to transmit the wheel information when one of the different kinds of specifying information which has been received by each wheel-side device from the request-signal transmitting portion specifies the above-indicated each wheel-side device, the wheel-information transmitting portion being inoperable when the above-indicated one kind of specifying information does not specify the above-indicated each wheel-side device.

In the vehicle-state obtaining apparatus according to the above mode (30) of this invention, the request-signal transmitting portion is arranged to transmit the specifying information and the request signal. The specifying information specifies a selected one of the wheel-side devices from which the body-side device receives the wheel information.

Each of the wheel-side device is arranged to transmit the wheel information when the specifying information received from the body-side device specifies that wheel-side device, but not to transmit the wheel information when the received specifying information does not specify the wheel-side device in question. Accordingly, the body-side device can receive the information indicative of the state of the desired wheel.

The different kinds of specifying information are correlated with the respective wheel-side devices. Namely, the body-side device includes a specifying-information memory portion storing information indicative of a relationship between the different kinds of specifying information and the respective wheel-side devices, and each wheel-side device also includes a specifying-information memory portion storing the corresponding specifying information.

In the vehicle-state apparatus constructed as described above, each wheel-side device can recognize, on the basis of the received specifying information, whether the wheel-side device in question is requested to transmit the wheel information.

Where the vehicle has right and left wheels and right and left wheels, the wheel-side devices are provided on these front and rear wheels, respectively. In this respect, the specifying information may be considered to be relative-position information indicative of a position of each wheel relative to the vehicle body. In other words, the relative positions of the wheels and the vehicle body can be obtained on the basis of the specifying information.

In a conventional vehicle-state obtaining apparatus, the request signal is transmitted from the body-side device to the wheel-side devices. In response to the request signal, the wheel-side devices transmit the wheel information together with identification data identifying the wheel-side devices. On the basis of the identification data, the body-side device obtains the wheel information received from the desired wheel-side device. In the vehicle-state obtaining apparatus according to the above mode (30) of the present invention, the body-side device is arranged to transmit the request signal, together with the specifying information specifying the desired wheel-side device from which the wheel information is to be transmitted. On the basis of the specifying information received from the body-side device, each wheel-side device determines whether the wheel-side device in question is requested to transmit the wheel information. That is, each wheel-side device transmits the wheel information when the received specifying information specifies that wheel-side device.

Some of the technical features of the above-described modes (1)-(29) of this invention are applicable to the vehicle-state obtaining apparatus constructed according to the mode (30) of the invention described just above, or vice versa. For example, the principle of the above mode (30) of the invention is applicable to a vehicle-state obtaining apparatus according to any one of the above modes (1)-(15), which is modified such that the information processing device is arranged to receive wheel information from a plurality of sensing devices in the form of the wheel-side devices provided in the above mode (30).

(31) A vehicle-state obtaining apparatus comprising:
a plurality of wheel-side devices provided on a plurality of wheels of a vehicle, respectively, each of the wheel-side devices including at least one sensor to detect a state of a corresponding one of the wheels, each wheel-side device being operable to transmit wheel information including the state of the corresponding wheel detected by the above-indicated at least one sensor; and
a body-side device provided on a body of the vehicle and including an information processing device operable to obtain the states of the plurality of wheels on the basis of the wheel information transmitted by the plurality of wheel-side devices,
wherein each of the plurality of wheel-side devices includes a positional-information obtaining portion operable to obtain positional information relating to a position of a corresponding one of the plurality of wheels in a coordinate system common to all of the plurality of wheels, and a positional-information transmitting portion operable to transmit the positional information obtained by the positional-information obtaining portion.

In the vehicle-state obtaining apparatus according to the above mode (31) of this invention, the wheel-side devices are arranged to obtain their positions (positions of the corresponding wheels), and transmit positional information relating to the obtained positions, to the body-side device. The obtained position of each wheel is a position in the coordinate system common to all of the wheels, and may be represented by an absolute position on the earth, or a position in a predetermined area. The wheel positions may be obtained on the basis of information received from an external device such as an earth satellite or a beacon. The external device may be arranged to obtain information relating to a position within a predetermined area. The positional-information obtaining portion may include an exclusive receiver portion operable to receive the information transmitted from such an external device, or may utilize the receiver portion provided for communication with the body-side device.

On the basis of the positional information relating to the positions of the wheels in the common coordinate system, the body-side device can obtain the position of each wheel-side device relative to the vehicle body, and correlate the wheel-side devices and the positional information. Each wheel-side device is preferably arranged to transmit the positional information together with identification data identifying that wheel-side device.

Some of the technical features of the above-described modes (1)-(30) of this invention are applicable to the vehicle-state obtaining apparatus constructed according to the mode (31) of the invention described just above, or vice versa. For example, the principle of the above mode (31) of the invention is applicable to a vehicle-state obtaining apparatus according to any one of the above modes (1)-(15), which is modified such that the information processing device is arranged to receive wheel information from a plurality of sensing devices in the form of the wheel-side devices provided in the above mode (31).

(32) The vehicle-state obtaining apparatus according to the above mode (31), wherein the body-side device includes a relative-position obtaining portion operable to obtain a position of each of the wheels relative to the body of the vehicle, on the basis of the positional information received from a corresponding one of the plurality of wheel-side devices before a movement of the vehicle in the coordinate system and the positional information received from the corresponding wheel-side device after the movement.

On the basis of the direction of a movement of the vehicle and the positions of each wheel before and after the vehicle movement, the positions of each wheel-side device relative to the vehicle body in the longitudinal and lateral directions of the vehicle can be obtained. The positions of each wheel-side device can be obtained irrespective of whether the vehicle is moved in the forward or backward direction, provided the direction of the movement is known to the body-side device.

If a distance the position of one of the front and rear left wheels after the forward movement of the vehicle and the position of the other of the front and rear wheels before the forward movement is smaller than a distance between the front and rear left wheels, for example, the above-indicated one wheel can be determined to be the left rear wheel, while the other wheel can be determined to be the left front wheel. If the above-indicated distance condition is satisfied when the vehicle is moved in the backward direction, the above-indicated one wheel can be determined to be the left front wheel, while the other wheel can be determined to be the left rear wheel.

(33) A vehicle-state obtaining apparatus comprising:
a sensing device including at least one sensor to detect a state of at least a portion of a vehicle and operable to transmit, by radio communication, sensor information including the state detected by the above-indicated at least one sensor; and
an information processing device operable to receive the sensor information and obtain the state of the vehicle on the basis of the received sensor information,
wherein the sensing device includes a key-information transmitting portion operable to change a previously transmitted set of key information according to a predetermined information changing rule, and transmit the changed set of key information; and
the information processing device obtains the predetermined information changing rule on the basis of a plurality of sets of key information received from the key-information transmitting portion, and includes a rule memory portion storing the obtained predetermined information changing rule.

Some of the technical features of the above-described modes (1)-(32) of this invention are applicable to the vehicle-state obtaining apparatus constructed according to the mode (33) of the invention described just above, or vice versa.

(34) A vehicle-state obtaining apparatus comprising:
a plurality of wheel-side devices provided on a plurality of wheels of a vehicle, respectively, each of the wheel-side devices including at least one sensor to detect a state of a corresponding one of the wheels, each wheel-side device being operable to transmit wheel information including the state of the corresponding wheel detected by the above-indicated at least one sensor; and
a body-side device provided on a body of the vehicle and including an information processing device operable to obtain the states of the plurality of wheels on the basis of the wheel information transmitted by the plurality of wheel-side devices, wherein two-way communication of information is effected between the plurality of wheel-side devices and the body-side device,
wherein the body-side device includes a plurality of body-side transmitting portions which are provided for the plurality of wheels, respectively, and which are operable to transmit respective different kinds of information,
and wherein each of the plurality of wheel-side devices obtains specific body-side information on the basis of a state of reception of at least one of the different kinds of information transmitted by at least one of the body-side transmitting portions, the specific body-side information consisting of a specific one of the different kinds of information which has been transmitted from a corresponding one of the plurality of body-side transmitting portions,
each wheel-side device including a specific-body-side-information memory portion for storing the specific body-side information.

In each of the wheel-side devices, the specific body-side information is determined on the basis of a state of reception of at least one of the different kinds of information transmitted from at least one of the body-side transmitting portions. The thus determined specific body-side information is stored in the specific-body-side-information memory portion of each wheel-side device.

Where each wheel-side device is arranged to store the different kinds of information received from the body-side transmitting portions, the wheel-side device may be arranged to count the number of the stored sets of each kind of information. When the counted number of the stored sets of any kind of information has increased to a predetermined value, that is, when the same kind of information has been received by the wheel-side device in question a predetermined number of times, that kind of information is determined as the specific body-side information, which is considered to have been transmitted from the body-side transmitting portion located nearest to the wheel-side device in question. Since the specific body-side information is correlated with the wheel-side device in question, the specific body-side information may be used as identification data identifying that wheel-side device. By using the specific body-side information as the identification data of the wheel-side device, the body-side device can obtain the wheel information transmitted from the desired wheel-side device, with a high degree of reliability.

However, each wheel-side device may be arranged to otherwise determine the specific body-side information, for example, on the basis of the ratio of the number of reception of each of the different kinds of information to a predetermined total number of recent reception of all of the received kinds of information, or on the basis of the number of recent reception of each kind of information when the different kinds of information have been received a predetermined total number. Described more specifically, one of the different kinds of information which has the highest ratio of reception or the largest number of reception is determined as the specific body-side information. Where a predetermined number of sets of information as counted from the last received set are stored, one of the different kinds of information which has the highest ratio or number of reception may be determined as the specific body-side information.

Where the position of a certain wheel is changed, the body-side transmitting portion corresponding to the wheel-side device for that wheel is also changed, so that the specific body-side information corresponding to the wheel-side device is changed. Accordingly, the specific body-side device to be stored in the specific-body-side-information memory portion is changed. When the position of the wheel corresponding to the wheel-side device in question is changed, the specific body-side information currently stored in the specific-body-side-information memory portion can be replaced, with high reliability, by the information transmitted from the body-side transmitting portion corresponding to the new position of the wheel.

Some of the technical features of the above-described modes (1)-(33) of this invention are applicable to the vehicle-state obtaining apparatus constructed according to the mode (34) of the invention described just above, or vice versa.

(35) The vehicle-state obtaining apparatus according to the above mode (34), wherein the plurality of body-side transmitting portions include respective wheel-position-data transmitting portions operable to transmit respective different kinds of wheel position data indicative of respective positions of the plurality of wheels relative to the body of the vehicle, and the specific-body-side-information memory portion of each wheel-side device includes a wheel-position-data memory portion for storing one of the different kinds of wheel position data which is determined as identification data identifying each wheel-side device, on the basis of a state of reception of at least one of the different kinds of wheel position data transmitted by at least one of the body-side transmitting portions.

In the vehicle-state obtaining apparatus according to the above mode (35), the body-side transmitting portions are arranged to transmit the different kinds of wheel position data, and each wheel-side device is arranged to store one of the different kinds of wheel position data in its wheel-position-data memory portion, as identification data identifying the wheel-side device in question. In other words, the identification data identifying each wheel-side device are not originally stored in the wheel-side device, but are transmitted from the body-side device and stored therein, so that it is not necessary to pre-store the identification data in each wheel-side device.

(36) The vehicle-state obtaining apparatus according to the above mode (34) or (35), wherein each of the plurality of wheel-side devices includes a received-information memory portion operable to store a predetermined maximum number of sets of the different kinds of information transmitted from the body-side transmitting portions, and a specific-body-side-information determining portion operable to determine the specific body-side information on the basis of the sets of the different kinds of information stored in the received-information memory portion.

The received-information memory portion is arranged to store the predetermined number of sets of the different kinds of information as counted from the set of information transmitted last from one of the body-side transmitting portions. On the basis of the information sets stored in the received-information memory portion, the wheel-side device determines one of the different kinds of information as the specific body-side information. As described above, one of the different kinds of information which has the highest ratio or number of reception with respect to the predetermined number of sets of information as counted from the last received set may be determined as the specific body-side information. Alternatively, one of the different kinds of information the reception number of which has increased to a predetermined value may be determined as the specific body-side information.

(37) A vehicle-state obtaining apparatus comprising:
a plurality of wheel-side devices provided on a plurality of wheels of a vehicle, respectively, each of the wheel-side devices including at least one sensor to detect a state of a corresponding one of the wheels, each wheel-side device being operable to transmit wheel information including the state of the corresponding wheel detected by the at least one sensor; and
a body-side device provided on a body of the vehicle and including an information processing device operable to obtain the states of the plurality of wheels on the basis of the wheel information transmitted by the plurality of wheel-side devices, wherein two-way communication of information is effected between the plurality of wheels-side devices and the body-side device,
wherein the body-side device includes a plurality of body-side transmitting portions which are provided for the plurality of wheels, respectively, and which are operable to transmit respective different kinds of information,
and wherein each of the plurality of wheel-side devices includes an identification-data obtaining portion operable to determine, as identification data identifying the above-indicated each wheel-side device, one of the different kinds of information which has transmitted from a corresponding one of the plurality of body-side transmitting portions.

In the vehicle-state obtaining apparatus according to the above mode (37) of this invention, the identification data identifying each wheel-side device is transmitted from a corresponding one of the body-side transmitting portions, and is stored in the wheel-side device in question.

Thus, the identification data of each wheel-side device is originally stored in the body-side device, so that the wheel-side devices are not required to transmit their identification data to the body-side device. This arrangement is effective to reduce a possibility of erroneous registration of the identification data of the wheel-side devices in the body-side device, and permits the body-side device to obtain the information of the desired wheel.

Further, a need of distinguishing the wheel-side devices from each other is reduced in the present vehicle-state obtaining apparatus. For instance, wheel position data indicative of a position of each wheel relative to the vehicle body are used as the information to be transmitted from the corresponding body-side transmitting portion, namely, as the identification data to be stored in the corresponding wheel-side device. In this case, a possibility of the body-side device of the vehicle in question to erroneously obtain wheel information of an adjacent vehicle is significantly reduced. Where the right front wheel of the vehicle in question is located relatively adjacent to the left front wheel of an adjacent vehicle, for instance, there is a reduced possibility that the wheel-side device corresponding to the right front wheel of the vehicle in question responds to the wheel-state request signal transmitted from the wheel-side device corresponding to the left front wheel of the adjacent vehicle. Thus, the present apparatus is arranged to minimize the possibility of erroneous transmission of the wheel information from the wheel-side devices or erroneous reception of the wheel information by the body-side device from the wheel-side device not requested to transmit the wheel information, without using identification data to identify the wheel-side devices and distinguish these wheel-side devices from each other. Since the identification data are not originally stored in the wheel-side devices, the total volume of information (e.g., wheel position data to be transmitted from the body-side device) required to specify the wheel-side device can be reduced.

Some of the technical features of the above-described modes (1)-(36) of this invention are applicable to the vehicle-state obtaining apparatus constructed according to the mode (37) of the invention described just above, or vice versa.

### BRIEF DESCRIPTION OF THE DRAWINGS

The above and other objects, features, advantages and technical and industrial significance of the present invention will be better understood by reading the following detailed description of preferred embodiments of the invention, when considered in connection with the accompanying drawings, in which:
Fig. 1 is a view schematically showing an overall arrangement of a vehicle-state obtaining apparatus constructed according to a first embodiment of this invention;
Fig. 2 is a block diagram schematically showing wheel-side devices and a body-side device including in the vehicle-state obtaining apparatus of Fig. 1;
Fig. 3 is a flow chart illustrating a key-information changing and transmitting program stored in a ROM of an information processing device of each wheel-side device;
Fig. 4 is a flow chart illustrating an initial-value registering program stored in a ROM of an information processing device of the body-side device:
Figs. 5A, 5B and 5C are views depicting communication of information when the wheel-side devices and transceiver devices are correlated with each other in the vehicle-state obtaining apparatus;
Fig. 6 is a view depicting communication of key information when the wheel-side devices are correlated with the body-side device;
Fig. 7 is a flow chart illustrating a wheel-information transmitting program stored in the ROM of the information processing device of the body-side device;
Fig. 8 is a flow chart illustrating a wheel-state obtaining program stored in the ROM of the information processing device of the body-side device;
Fig. 9 is a view depicting communication of information between the wheel-side devices and the body-side device when the wheel-state obtaining program is executed;
Fig. 10 is a view depicting communication of information between the wheel-side devices and the body-side device when the wheel-state obtaining program is executed;
Fig. 11 is a view depicting communication of information where the wheel-side devices are correlated with the body-side device in a second embodiment of this invention;
Fig. 12 is a view indicating position information received by the wheel-side devices in the second embodiment;
Fig. 13 is a block diagram schematically showing wheel-side devices and a body-side device of a vehicle-state obtaining apparatus according to a third embodiment of the present invention;
Fig. 14 is a flow chart illustrating a reception-ratio transmitting program stored in a ROM of an information processing device of each wheel-side device in the third embodiment;
Fig. 15 is a flow chart illustrating an identification-data registering program stored in a ROM of an information processing device of the body-side device in the third embodiment;
Fig. 16 is a flow chart illustrating a wheel-state obtaining program stored in the ROM of Fig. 15;
Fig. 17 is a flow chart illustrating a wheel-information transmitting program stored in the ROM of the information processing device of each wheel-side device in the third embodiment;
Fig. 18 is a block diagram schematically showing wheel-side devices and a body-side devices of a vehicle-state obtaining apparatus according to a fourth embodiment of this invention;
Fig. 19 is a view schematically showing a state of a position-information memory portion of each wheel-side device in the third embodiment;
Fig. 20 is a flow chart illustrating a wheel-information transmitting program stored in a ROM of an information processing device of the wheel-side device in the third embodiment;
Fig. 21 is a flow chart illustrating a wheel-state obtaining program stored in a ROM of an information processing device of the body-side device in the fourth embodiment;
Fig. 22 is a view schematically showing another state of the position-data memory portion of each wheel-side device;
Fig. 23 is a view schematically showing communication of information in a vehicle-state obtaining apparatus according to a fifth embodiment of this invention;
Fig. 24 is a block diagram schematically showing wheel-side devices and a body-side device of a vehicle-state obtaining apparatus according to a sixth embodiment of this invention;
Fig. 25 is a view schematically showing communication of information between the wheel-side devices and the body-side device in the sixth embodiment; and
Fig. 26 is a flow chart illustrating a relative-position obtaining program stored in a ROM of an information processing device of the body-side device in the sixth embodiment.

### DETAILED DESCRIPTION OF THE PREFERRED EMBODIMENT

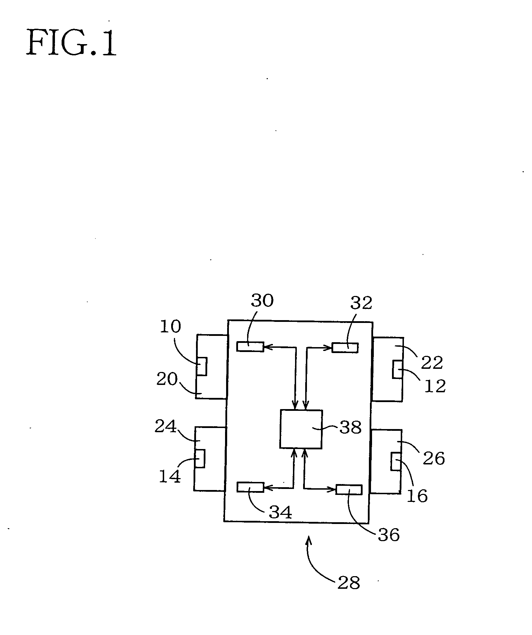

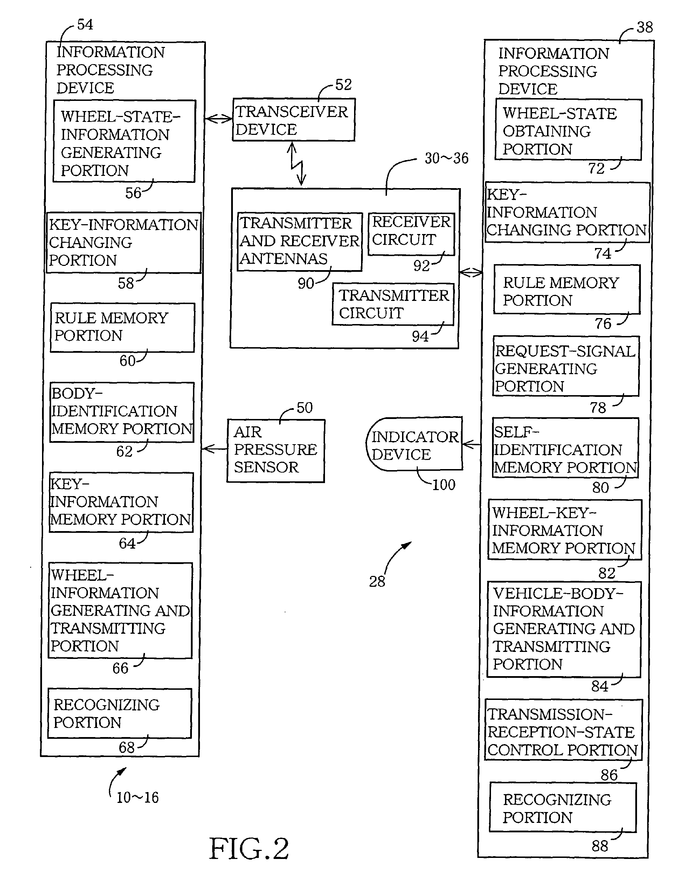

Referring first to Figs. 1 and 2, there will be described a vehicle-state obtaining apparatus constructed according to the first embodiment of this invention. In Fig. 1, reference numerals 10, 12, 14 and 16 respectively denote sensing devices in the form of wheel-side devices respectively provided on left and right front wheels 20, 22 and left and right rear wheels 24, 26 of a motor vehicle, while reference numeral 28 denotes a body-side device provided on a body of the vehicle. The body-side device 28 includes four transceiver devices 20, 22, 24, 26 disposed at respective portions of the vehicle body which are located near the respective four wheels 20, 22, 24, 26. The body-side device 28 further includes an information processing device 38 also disposed on the vehicle body.

As shown in Fig. 2, each of the wheel-side devices 10-16 includes: an air pressure sensor 50 operable to detect a state of the vehicle or a state of the corresponding wheel, more specifically, a tire air pressure of the corresponding wheel 20-26; a transceiver device 52 operable to transmit and receive information to and from the transceiver devices 30-36 of the body-side device 28; and an information processing device 54 which is principally constituted by a computer.

The transceiver device 52 includes a transmitter-receiver antenna, a transmitter circuit and a receiver circuit. The information processing device 54 includes: a wheel-state-information generating portion 56 operable to generate air-pressure data (one form of a wheel-state information) indicative of the tire air pressure detected by the air-pressure sensor 50; a key-information changing portion 58 operable to change key information according to an information changing rule; a rule memory portion 60 provided to store the information changing rule; a body-identification memory portion 62 provided to store identification data identifying the body-side device 28; a key-information memory portion 64 provided to store last two sets of the key information which were transmitted from the wheel-side device in question; a wheel-information generating and transmitting portion 66 operable to generate wheel information (sensor information transmitted from the sensing devices) and transmit the generated wheel information through the transceiver device 52; and a recognizing portion 68.

The wheel information includes at least one of the above-described air-pressure data (wheel-state information) and key information.

The body-side device 28 includes the above-indicated transceiver devices 30-36, and the above-indicated information processing device 38, which is also principally constituted by a computer. The information processing device 38 includes: a wheel-state obtaining portion 72; a key-information changing portion 74; a rule memory portion 76; a request-signal generating portion 78; a self-identification memory portion 80; a wheel-key-information memory portion 82; a vehicle-body-information generating and transmitting portion 84; a transmission-reception-state control portion 86; and a recognizing portion 88. The wheel-state obtaining portion 72 is operable to obtain the vehicle state or the wheel states in the form of the tire air pressures on the basis of the wheel information received through the transceiver devices 30-36. The key-information changing portion 74 is operable to change the key information, and the rule memory portion 76 is provided to store the information changing rule used by the key-information changing portion 74. The request-signal generating portion 78 is operable to generate a wheel-state request signal requesting the transmission of the wheel information. The self-identification memory portion 80 is provided to store identification data identifying the information processing device 38. The wheel-key-information memory portion 82 is provided to store sets of the key information in relation to the wheel-side devices 10-16. The vehicle-body-information generating and transmitting portion 84 is operable to generate vehicle-body information including at least one of the wheel-state request signal and the key information, and transmit the generated vehicle-body information. The transmission-reception-state control portion 86 is operable to control at least one of the transmission and reception states of the transceiver devices 30-36.

In the present embodiment, the rule memory portions 60 of the four wheel-side devices 10-16 store the same information changing rule, which is also stored in the rule memory portion 76 of the body-side device 28. The information processing device 54 of each wheel-side device 10, 12, 14, 16 and the information processing device 38 of the body-side device 28 recognize that the information changing rule stored in the rule memory portion 60 and the information changing rule stored in the rule memory portion 76 are identical with each other. Each of the transceiver devices 30-36 which are disposed at the respective portions of the vehicle body near the respective wheels 20-26 includes a transmitter-receiver antenna 90, a receiver circuit 92 and a transmitter circuit 94.

In the present embodiment, the wheel-side devices 10-16 and the body-side device 28 are capable of effecting two-way communication of information therebetween.

In a wheel-state obtaining mode (which may be referred to as "a normal operating mode" where appropriate) of the wheel-state obtaining apparatus, the body-side device 28 transmits the wheel-state request signal and the key information, and one of the wheel-side devices 10-16 the recognizing portion of which has recognized that the received key information identifies that one wheel-side device transmits the wheel-state information and the key information changed by its key-information changing portion 58. On the basis of the wheel-state information received from the wheel-side device 10, 12, 14, 16, the body-side device 28 obtains the tire air pressure of the corresponding wheel 20, 22, 24, 26, when the recognizing portion 88 has recognized, on the basis of the received key information, that the received wheel-state information has been transmitted from the wheel-side device to which the wheel-state request signal was addressed.

The wheel-state obtaining apparatus further has a registering mode (which may be referred to as "a key-information-initial-value registering mode" or "an initial-value assigning mode") for registering information by which it is possible to determine whether the wheel-side devices 10-16 correspond to the respective transceiver devices 30-36. In this registering mode, the wheel-side devices 10-16 and the transceiver devices 30-38 effect two-way communication of the key information therebetween, to register the information by which the transceiver devices 30-36 are correlated with the respective wheel-side devices 10-16.

By correlating the transceiver devices 30-36 with the respective wheel-side devices 10-16, the positions of the wheel-side devices 10-16 relative to the vehicle body are determined, and the key information received from the wheel-side devices 10-16 are stored in the wheel-key-information memory portion 82 of the body-side device 28, together with the determined relative positions (indicative of the transceiver devices 30-36). In each wheel-side device 10, 12, 14, 16, the key information is stored in the key-information memory portion 64.

The wheel-side devices 10-16 and the body-side device 28 are arranged to change the key information according to the predetermined information changing rule, and to transmit the changed key information, as described below.

When the key information D is transmitted from the transceiver device 30 of the body-side device 28, for example, the key-information changing portion 58 of the wheel-side device 10 changes the received key information D according to the information changing rule stored in the rule memory portion 60, and the thus changed key information D^{a} is transmitted from the transceiver device 52.

On the other hand, the body-side device 28 forecasts the changed key information D^{a} expected to be received from the wheel-side device 10, on the basis of the previously transmitted original key information D and the information changing rule stored in the rule memory portion 76. The body-side device 28 recognizes that the rule stored in its rule memory portion 76 is identical with the rule stored in the rule memory portion 60 of the wheel-side device 10. If the actually received changed key information D^{a} is identical with the forecast changed key information D^{a}, the recognizing portion 88 recognizes that the wheel-side device 10 is one of the four wheel-side devices 10-16 which corresponds to the body-side device 28. In this case, the key-information changing portion 74 of the body-side device 28 changes the received key information D^{a} according to the information changing rule stored in the rule memory portion 76, and the thus changed key information D^{aa} is transmitted from the transceiver device 30.

Similarly, the wheel-side device 10 forecasts the changed key information D^{aa} expected to be received from the body-side device 10, on the basis of the previously transmitted key information D^{a} and the information changing rule stored in the rule memory portion 60. The wheel-side device 10 recognizes that the rule stored in its rule memory portion 60 is identical with the rule stored in the rule memory portion 76 of the body-side device 28. If the actually received changed key information D^{aa} is identical with the forecast changed key information D^{aa}, the recognizing portion 68 recognizes that the body-side device 28 corresponds to the wheel-side device 10.

For instance, the information changing rule is formulated to change the key information on the basis of a random number (random digit) selected according to a table of random numbers (digits). In this instance, the same random number table is stored in the rule memory portion 50 of each wheel-side device 10, 12, 14, 16 and in the rule memory portion 76 of the body-side device 28. On the basis of the key information previously transmitted and the selected random number, the changed key information expected to be received can be forecast. By assigning different initial values of the key information to the respective wheel-side devices 10-16, it is almost fully assured that different kinds of key information are transmitted from the body-side device 28 to the individual wheel-side devices 10-16.

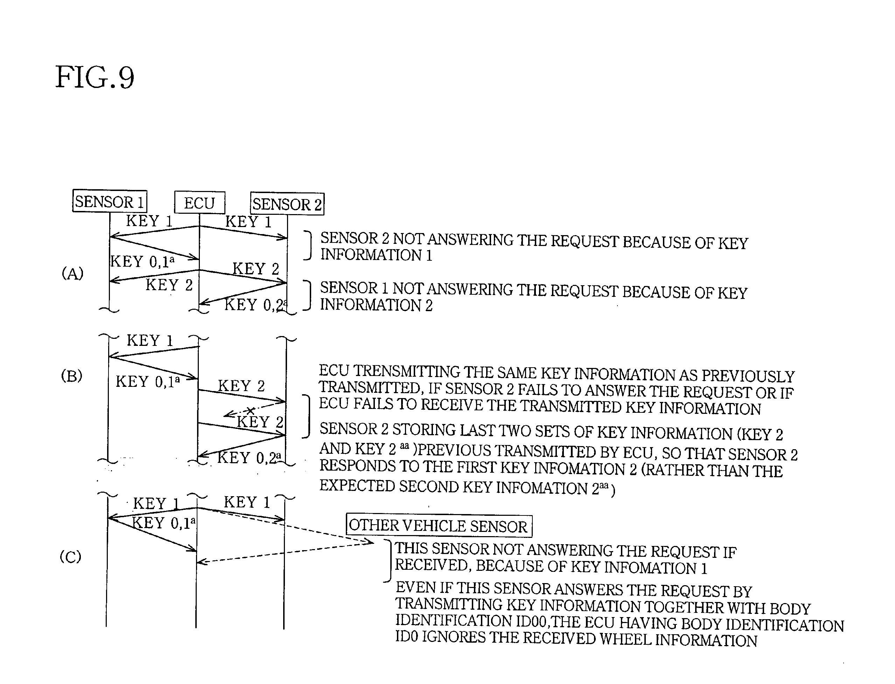

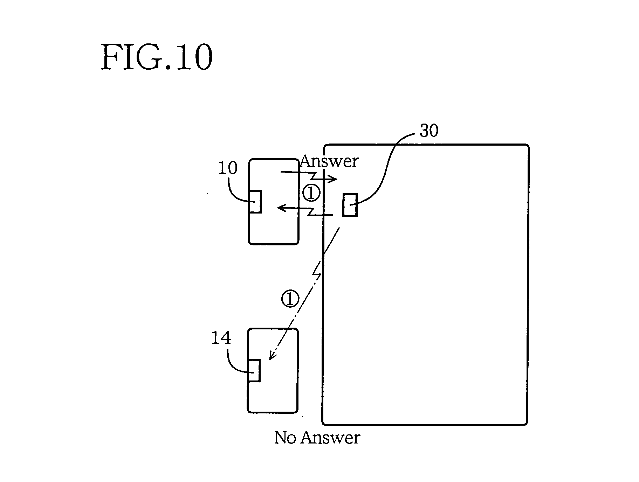

As shown at (A) in Fig. 9 and in Fig. 10, the key information as well as the wheel-state request signal is transmitted from the transceiver device 30 of the body-side device 28, in the wheel-state obtaining mode. If the wheel-state devices 10 and 14 receive the transmitted key information, each of these wheel-side devices 10, 14 determines whether the presently received key information is identical with the forecast key information. This determination to determine whether the wheel-side device 10, 14 corresponds to the body-side device 28 (whether the wheel-state request signal was addressed to the wheel-side device 10, 14) is made on the basis of the key information previously transmitted from the wheel-side device 10, 14 and the information changing rule. In Fig. 9, SENSOR 1 and SENSOR 2 represent the wheel-side devices 10 and 14, respectively, while ECU represents the information processing device 38 of the body-side device 28.

In this case where the wheel-side device 10 corresponds to the transceiver device 30 (of the body-side device 28 which requested the wheel-side device 10 to transmit the wheel information), the wheel-side device 10 recognizes that the wheel-side device 10 is requested to transmit the wheel-state information, and transmits the wheel information including the air-pressure data and the received key information as changed according to the information changing rule. In this case, the wheel information is not transmitted from the wheel-side device 14.

On the other hand, the body-side device 28 determines, on the basis of the key information received together with the air-pressure data, whether the received wheel information was transmitted from the wheel-side device 10 to which the wheel-state request signal was transmitted from the body-side device 28. If the body-side device 28 recognizes that the received wheel information was received from the wheel-side device 10, the body-side device 28 obtains the tire air pressure of the left front wheel 20, on the basis of the received wheel information.

In each of the wheel-side devices 10-16, the body-identification memory portion 62 stores identification data IDO (indicated in Fig. 9 by "0" following "KEY") which identifies the body-side device 28, so that each wheel-side device 10, 12, 14, 16 transmits the identification data IDO together with the air-pressure data. If the wheel-state request signal transmitted from the body-side device 28 is received by a wheel-side device of another vehicle, and this wheel-side device transmits the key information together with identification data ID00 identifying the body-side device of the above-indicated another vehicle, as indicated by broken line at (C) in Fig. 9, so that the body-side device 28 recognizes that the received key information was not transmitted from the wheel-side device to which the wheel-state request signal was addressed.

Thus, on the basis of the identification data ID transmitted together with the key information, the wheel-side devices 10-16 and the body-side device 28 can determine whether the received information is transmitted from the corresponding body-side device 28 or the wheel-side device 10, 12, 14, 16. Since the identification data ID are provided not for each of the wheel-side devices 10-16, but are provided for the body-side device 28, that is, for the vehicle on which the vehicle-state obtaining apparatus is provided, there is a lower probability of erroneous recognition of the identification data. However, the use of the identification data identifying the body-side device 28 (vehicle) is not essential.

Where the body-side device 28 fails to receive the wheel information from the wheel-side device 14, for example, as indicated by one-dot chain line at (B) in Fig. 9, the body-side device 28 transmits again the same key information as previously transmitted. The failure takes place in one of the following two cases: 1) The wheel-side device 14 fails to receive the wheel information transmitted from the body-side device 28; and 2) The body-side device 28 fails to receive the wheel information transmitted from the wheel-side device 14. On the other hand, the key-information memory portion 64 of each wheel-side device 10-16 is arranged to store the last two sets of key information previously transmitted from the body-side device 28, in the wheel-state obtaining mode, so that each wheel-side device 10-16 can recognize that the last set of key information which is again transmitted from the body-side device 28 is received from the corresponding body-side device 28 (from the corresponding vehicle).

Although the key-information memory portion 64 is arranged to store the successively transmitted last two sets of key information in the present embodiment, the memory portion 64 may be modified to store the last three or more sets of key information.

In the registering mode, the key information is transmitted and received between the body-side device 28 and each wheel-side device 10-16. In this mode, the key information is sequentially transmitted from the four transceiver devices 30-36. There will be described an example in which the key information D1 is transmitted from the transceiver device 30, while no key information is transmitted from the other transceiver devices 32, 34, 36. Since the initial values of the key information have not been assigned to the wheel-side devices 10-16, and since the same information changing rule is stored in the rule memory portions 60 of all wheel-side devices 10-16, the key information D1 received by all of the wheel-side devices 10-16 is changed according to the same information changing rule, and the changed key information D1^{a} is transmitted from the wheel-side devices 10-16. In this example, four sets of the same key information transmitted D1^{a} from the four wheel-side devices 10-16 may be received by the body-side device 28.

If only the transceiver device 30 of the body-side device 28 has received the key information D1^{a} that is, the information processing device 38 receives only one set of the key information D1^{a}, this key information is considered to have been received from the wheel-side device 10 located nearest to the transceiver device 30. In this case, the transceiver device 30, the wheel-side device 10 and the key information D1^{a} are correlated with each other, and the wheel-key-information memory portion 82 stores the key information D1^{a} in relation to the transceiver device 30 (corresponding to the left front wheel 20). Further, the information processing device 30 assigns the key information D1^{a} to the wheel-side device 10, and the key information D1^{a} is stored in the key-information memory portion 64.

If the two sets of key information are received by the information processing device 38, that is, if the two or more devices of the four wheel-side devices 10-16 have received the key information transmitted from the transceiver device 30, the transmission intensity of the key information D1^{aa} to be transmitted next from the transceiver device 30 is reduced to reduce the number of the wheel-side devices 10-16 (and wheel-side devices of other vehicles) which can receive the transmitted key information D1^{aa}.

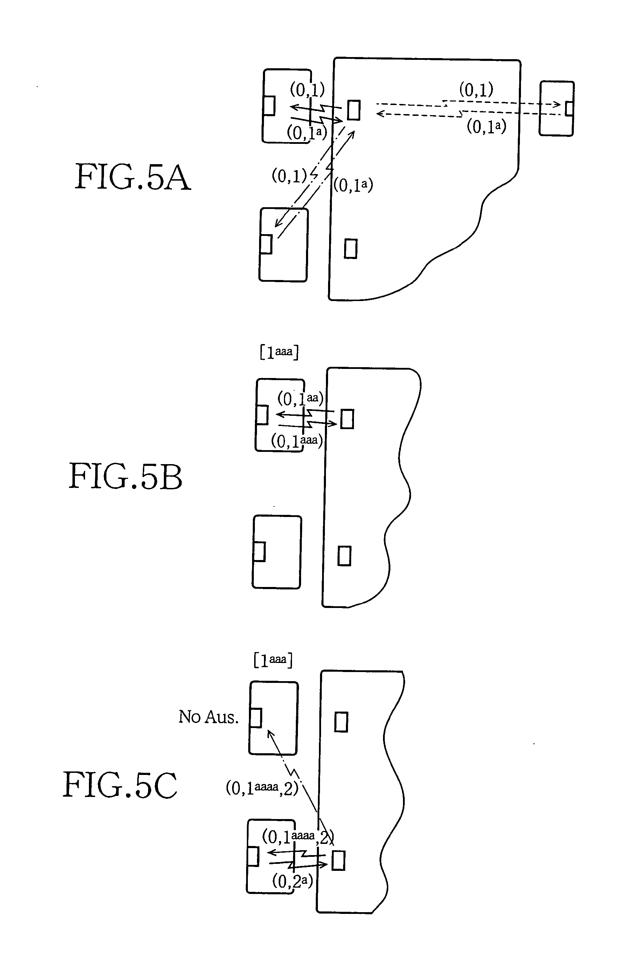

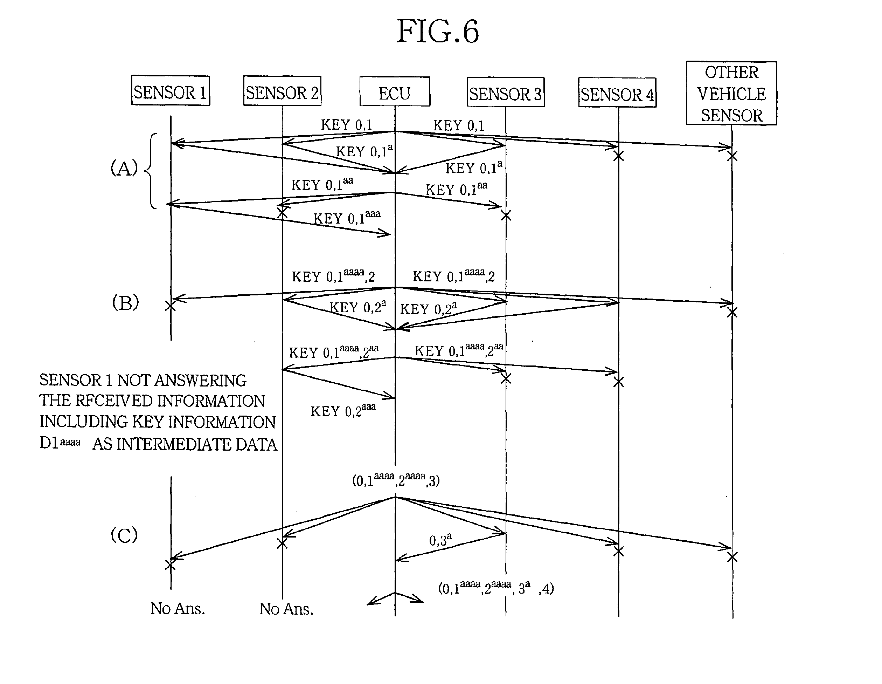

If the key information initially transmitted from the transceiver 30 is received by the three wheel-side devices 10, 12, 14, as indicated in Fig. 5A and at (A) in Fig. 6, the transmission intensity of the key information to be transmitted next is reduced, so that the number of the wheel-side devices 10-16 which can receive the next transmitted key information is reduced, and the wheel-side devices of the other vehicles existing near the vehicle in question will not receive the key information. In Fig. 6, SENSOR 1-4 represent the wheel-side devices 10, 14, 12 and 16, respectively, while ECU represents the information processing device 38 of the body-side device 28. The reduction of the transmission intensity is repeated until only the key information transmitted by the wheel-side device 10 is received by the wheel-side device 30, namely, until the body-side device 28 receives the key information from only the wheel-side device 10, as indicated at Fig. 5B. In the specific example of Fig. 5B, the transceiver device 30, the wheel-side device 10 and the key information D1^{aaa} are correlated with each other, and the key information D1^{aaa} is assigned to the wheel-side device 10 and stored in its key-information memory portion 64. The key-information memory portion 64 may be arranged to store also the key-information D1^{aa} received from the transceiver device 30.

Then, the key information D2 is transmitted from the transceiver device 34, as indicated in Fig. 5C and at (B) in Fig. 6. In this case, the transceiver 34 transmits information which includes the key information D2 as last data, and key information D1^{aaaa} as intermediate data in this order. The wheel-side device 10 does not answer the received information transmitted from the transceiver device 34, since the key information D1^{aaaa} expected to be received by the wheel-side device 10 is included as the intermediate data.

Accordingly, the key information D2 transmitted from the transceiver device 34 is received by the wheel-side device 14 nearest to the transceiver device 34, and may be received by at least one of the other wheel-side devices 12, 16 other than the wheel-side device 10. Each wheel-side device which has received the key information D2 changes the received key information D2 into D2^{a}, and transmits the changed key information D2^{a}.

If the body-side device 28 receives the changed key information D2^{a} from the two or more devices of the wheel-side devices 12, 14, 16, the transmission intensity of the key information D2^{aa} to be transmitted next from the transceiver device 34 is reduced to reduce the number of the wheel-side devices that can receive the key information D2^{aa}.

By repeating the reduction of the transmission intensity of the key information transmitted from the transceiver device 34, only the wheel-side device 14 can receive the key information from the transceiver device 34, so that the wheel-side device 14, the transceiver device 34 and the key information D2^{aaa} are correlated with each other, and the key information D2ₐₐₐ is stored in the wheel-key-information memory 82 of the body-side device 28, in relation to the transceiver device 34.

Similarly, the appropriate sets of key information are stored in the key-information memory portion 82, in relation to the transceiver devices 32 and 36, as indicated at (C) in Fig. 6. Thus, the key information is stored in the memory portion 82, in relation to each of the four transceiver devices 30-36. When the body-side device 28 obtains the tire air pressure of the left front wheel 20, for instance, the body-side device 28 reads out from the wheel-key-information memory portion 82 the key information Dlaaa which corresponds to the left front wheel 20. This key information D1^{aaa} is changed into key information D1^{aaaa}, and the changed key information D1^{aaaa} is transmitted together with the wheel-state request signal, from the corresponding transceiver device 30. In response to this wheel-state request signal, the wheel-side device 10 changes the received the key information D1^{aaaa} into the key information D1^{aaaaa}, and transmits the key information D1^{aaaaa} together with the air-pressure data. The wheel-key-information memory portion 82 replaces the previously stored key information D1^{aaa} with the presently received key information D1^{aaaaa}.

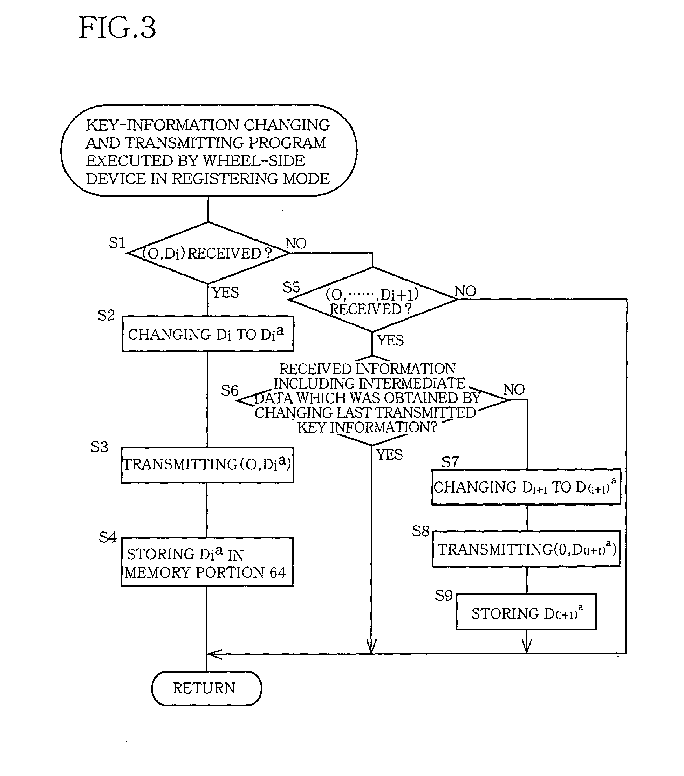

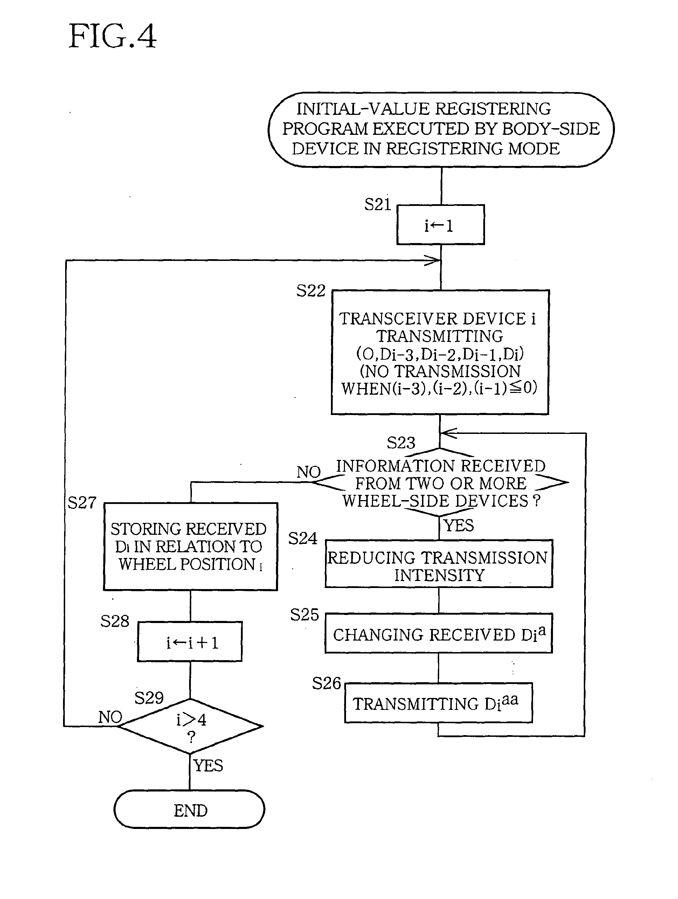

In the registering mode of the present vehicle-state obtaining apparatus, a key-information changing and transmitting program illustrated in the flow chart of Fig. 3 is executed in each wheel-side device, while an initial-value registering program illustrated in the flow chart of Fig. 4 is executed in the body-side device 28.

The key-information changing and transmitting program of Fig. 3 is initiated with step S1 to determine whether the wheel-side device in question has received information including the identification data D0 of the body-side device 28 (indicated by "0" in Fig. 3) and the key information Dᵢ. In Fig. 3, "Dᵢ" merely indicates the key information received, but does not indicate a change of the key information D. If the wheel-side device has received the information (0, Di), that is, if an affirmative decision (YES) is obtained in step S1, the control flow goes to steps S2 and S3 to change the received key information Dᵢ into key information Dᵢ^{a} according to the predetermined information changing rule, and transmit the changed key information Dᵢ^{a}. Step S3 is followed by step S4 in which the transmitted key information Dᵢ^{a} is stored in the key-information memory portion 64. When the wheel-side device receives key information Dᵢ^{aa} which is obtained by the body-side device 28 by changing the received key information Dᵢ^{a}, the wheel-side device changes the received key information Dᵢ^{aa} into key information Dᵢ^{aaa}, and transmit the information (0, Dᵢ^{aaa}), in steps S2 and S3, and stores the key information Dᵢ^{aaa} in the key-information memory portion 64, in place of the previously stored key information Dᵢ^{a}, in step S4. Thus, the latest key information is stored in the key-information memory portion 64, as a result of changing of the key information according to the predetermined rule by the body-side device 28 and the wheel-side device in question.

When the wheel-side device has received information including the identification data IDO and two or more sets of key information, an affirmative decision (YES) is obtained in step S5, and the control flow goes to step S6 to determine whether the intermediate data of the received information is key information Dᵢ^{aaaa} which was obtained by changing the last transmitted key information Dᵢ^{aaa}. If a negative decision (NO) is obtained in step S6, the control flow goes to steps S7 and S8 to change the last key information Dᵢ₊₁ to key information D₍ᵢ₊₁₎^{a} and to transmit information (0, D₍ᵢ₊₁₎^{a}) including the changed key information D₍ᵢ₊₁₎^{a}, and then to step S9 to store this information D₍ᵢ₊₁₎^{a} in the key-information memory portion 64, in place of the previously stored key information Dᵢ^{aaa}. Steps S1 and S5-S9 are repeatedly implemented until an affirmative decision (YES) is obtained in step S6.

When the received information includes the key information Dᵢ^{aaaa} obtained by changing the last transmitted key information Dᵢ^{aaa}, this means that the body-side device 28 has assigned an initial value to the wheel-side device in question. In this case, key information is no longer transmitted from this wheel-side device in the registering mode, and the key information included in the received information as the last data is stored in the key-information memory portion 74 of the wheel-side device and in the wheel-key-information memory portion 82 of the body-side device 28.

As described above, the identification data IDO (0) identifying the body-side device 28 are transmitted together with the key information, in the two-way communication between each wheel-side device and the body-side device 28, in the registering mode of the vehicle-state obtaining apparatus.

The initial-value registering program illustrated in the flow chart of Fig. 4 is initiated with step S21 to set a counter i to an initial value 1. A count of this counter i indicates one of the four transceiver devices 30-36. For example, the count 1 indicates the transceiver device 30. In other words, the count of the counter i indicates the position of one of the left and right front and rear wheels 20-24. After the counter i has been set to 1 in step S21, the control flow goes to step S22 in which information (0, Dᵢ) is transmitted from the first transceiver device 30 indicated by the present count 1 of the counter i.

Step S22 is followed by step S23 to determine whether the information has been received from two or more of the wheel-side devices. If an affirmative decision (YES) is obtained in step S23, it is considered that the information transmitted from the transceiver device 30 was received by not only the wheel-side device 10 but also at least one of the other wheel-side devices 12, 14, 16. In this case, therefore, the control flow goes to step S24 to reduce or decrement the transmission intensity of the information to be transmitted next from the transceiver device 30. Step S24 is followed by steps S25 and S26 to change the received key information Dᵢ^{a} into key information Dᵢ^{aa}, and transmit the changed key information Dᵢ^{aa}.

Steps S23-S26 are repeatedly implemented, with the transmission intensity being decremented, until the information transmitted from the transceiver device 30 is received from only the wheel-side device 10, as indicated at (A) in Fig. 6.

When the information is received from only the wheel-side device 30, that is, when a negative decision (NO) is obtained in step S23, the control flow goes to step S27 in which the received key information Dᵢ^{a} is stored in the wheel-key-information memory portion 82, in relation to the count 1 (in relation to the transceiver device 30 or the position of the corresponding wheel 20). Namely, an initial value D1^{a} is assigned to the wheel-side device 10 corresponding to the transceiver device 30.

Then, step S28 is implemented to increment the counter i, and step S28 is followed by step S29 to determine whether the count of the counter i is larger than 4. When step S29 is initially implemented, the counter is not larger than 4, and a negative decision (NO) is obtained in step S29, so that the control flow goes back to step S22.

In the second cycle of implementation of step S22, the second transceiver device 32 corresponding to the count 2 is specified, so that information (0, D1^{a}, D2) is transmitted from the transceiver device 32. Step S22 is followed by steps S23-S26, which are repeatedly implemented and followed by steps S27 and S28, as described above, so that key information D2^{a} is stored in the wheel-key-information memory 82, in relation to the count 2. Similarly, the initial-value registering program is repeatedly executed until the count of the counter i becomes larger than 4. As a result, the key information D1, D2, D3 and D4 are stored in the memory portion 82, in relation to the respective count values 1, 2, 3 and 4. When an affirmative decision (YES) is obtained in step S29, the execution of the present program is terminated.

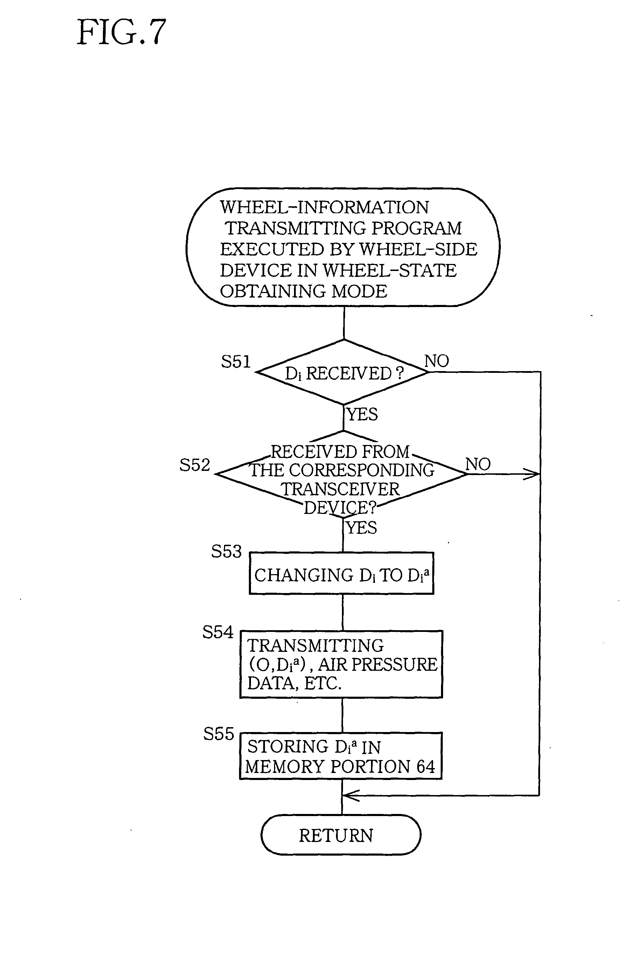

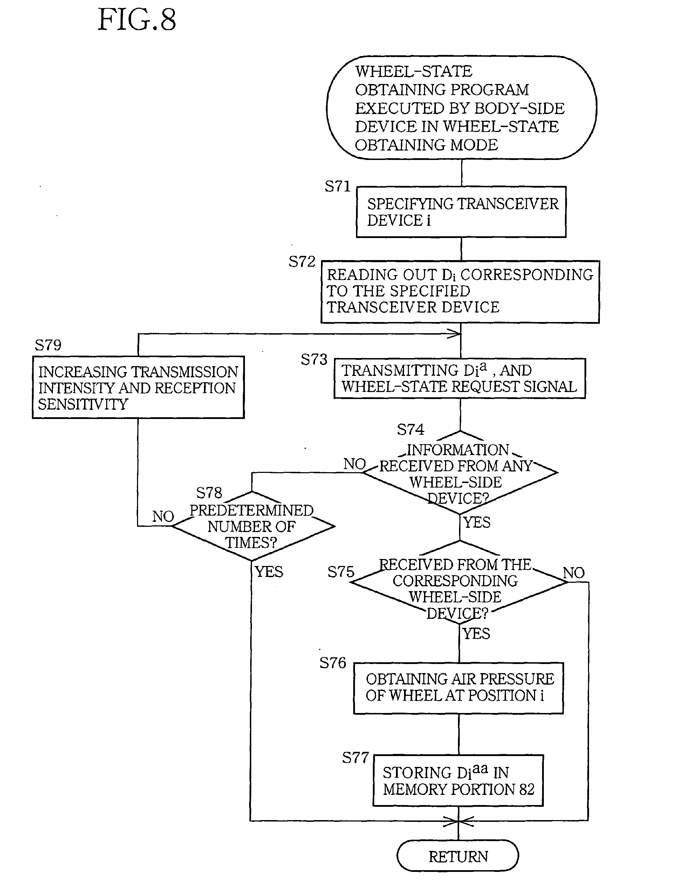

In a wheel-state obtaining mode, a wheel-information transmitting program illustrated in the flow chart of Fig. 7 is executed in each wheel-side device, while a wheel-state obtaining program illustrated in the flow chart of Fig. 8 is executed in the body-side device 28.

The wheel-information transmitting program illustrated in the flow chart of Fig. 7 is initiated with step S51 to determine whether the wheel-side device in question has received the wheel-state request signal and key information Dᵢ. If an affirmative decision (YES) is obtained in step S51, the control flow goes to step S52 to determine whether the received wheel-state request signal was received from the corresponding transceiver device of the body-side device 28. This determination is made on the basis of the received key information Dᵢ.

If an affirmative decision (YES) is obtained in step S52, the control flow goes to step S53 in which the received key information Dᵢ is changed to Dᵢ^{a}, and air-pressure data are generated by the wheel-state-information generating portion 56, on the basis of an output of the air-pressure sensor 50. Step S53 is followed by step S54 to transmit a series of wheel information including the key information Dᵢ^{a}, identification data IDO of the body-side device 28, and the generated air-pressure data. Then, step S55 is implemented to store the transmitted key information Dᵢ^{a} in the key-information memory portion 64. In the wheel-state obtaining mode, the memory portion 64 stores the previously transmitted last two sets of key information. To make the determination in step S52 as to whether the wheel-state request signal was received from the corresponding transceiver device of the body-side device 28, the key information expected to be received is forecast on the basis of the key information sets stored in the memory portion 64, and according to the predetermined information changing rule, and a determination is made as to whether the key information Dᵢ actually received with the wheel-state request signal is identical with the forecast key information. Since the information changing rule stored in the rule memory portion 60 of the wheel-side device is the same as stored in the rule memory portion 76 of the body-side device 28, the wheel-side device can forecast the key information expected to receive from the corresponding body-side device 28, so that the determination in step S52 can be made, even if the presently received key information is the same as the key information transmitted last from the wheel-side device. In this case, the presently received key information (identical with the last transmitted key information) is changed according to the information changing rule stored in the rule memory portion 60, and the thus changed key information is transmitted..

If the presently received key information is not identical with the forecast key information, that is, if the received information was not transmitted from the corresponding transceiver device of the body-side device 28 in question, a negative decision (NO) is obtained in step S52. In this case, the air-pressure data are not transmitted. The negative decision is obtained in step S52 when the information is received from the transceiver device not corresponding to the wheel-side device in question, or from a body-side device of any other vehicle.

The wheel-state obtaining program illustrated in the flow chart of Fig. 8 is initiated with step S71 to specify the transceiver device corresponding to the wheel the air pressure of which is to be obtained. Step S71 is followed by step S72 to read out from the wheel-key-information memory portion 82 the key information corresponding to the specified transceiver device. Then, step S73 is implemented to change the read out key information, and transmit the changed key information together with the wheel-state request signal, namely, transmit a series of wheel information including the changed key information and the wheel-state request signal.

Then, the control flow goes to step S74 to determine whether information has been received from any wheel-side device. If an affirmative decision (YES) is obtained in step S74, the control flow goes to step S75 to determine whether the received information was transmitted from the wheel-side device in question. This determination is made on the basis of key information Dᵢ^{aa} included in the received information.

If an affirmative decision (YES) is obtained in step S75, the control flow goes to step S76 in which the air pressure of the wheel in question is obtained on the basis of the received wheel information. Step S76 is followed by step S77 to store the received key information Dᵢ^{aa} in the key-information memory portion 82. Thus, the tire air pressure of the wheel corresponding to the transceiver device specified by the count i is obtained on the basis of the wheel information received from the wheel-side device corresponding to the specified transceiver device.

The operator of the vehicle in question may be informed of the tire air pressure obtained by the body-side device 28, through an indicator device 100 (Fig. 1). The information processing device 38 may be arranged to determine whether the obtained tire air pressure is lower than a predetermined lower limit, and activate the indicator device 100 if the tire air pressure is lower than the lower limit, so that the operator is informed of this fact.

If a negative decision (NO) is obtained in step S75, the tire air pressure is not obtained. The wheel information is not transmitted from a wheel-side device in response to the wheel-state request signal received from any transceiver device not corresponding to the wheel-side device in question. However, even if the wheel information is received from the wheel-side device not corresponding to the transceiver device in question, for some reason or other, the air pressure is not obtained by the body-side device 28 on the basis of the received wheel information. This arrangement prevents erroneous detection of the tire air pressure of the wheel not corresponding to the specified transceiver device.

If the wheel information has not been received, that is, if a negative decision (NO) is obtained in step S74, the control flow goes to step S78 to determine the determination in step S74 has been made a predetermined number of times. If a negative decision (NO) is obtained in step S78, the control flow goes to step S79 to increment the transmission intensity of the information to be transmitted from the transceiver device in question, and increment the reception sensitivity of the transceiver device in question. Step S79 is followed by step S73 to transmit again the information including the same key information and the wheel-state request signal, as described above. Steps S73-S74, S78 and S79 are repeatedly implemented until the affirmative decision (YES) is obtained in step S74, or until the determination in step S74 has been made the predetermined number of times.

The negative decision (NO) is obtained in step S74 when the wheel information is not transmitted from the corresponding wheel-side device, or when the transceiver device in question fails to receive the wheel information transmitted from the corresponding wheel-side device. When the negative decision is obtained in step S74, therefore, the step S79 is implemented to increment the reception sensitivity and the transmission intensity of the specified transceiver device.

However, both of the reception sensitivity and the transmission intensity need not be incremented. That is, the probability of reception of the wheel information by the transceiver device can be increased by increasing one of the reception sensitivity and the transmission intensity.

As described above, the vehicle-state obtaining apparatus according to the present embodiment is arranged to effect two-way communication between the body-side device 28 and each wheel-side device 10-16, while changing the key information according to the predetermined information changing rule, so that the wheel-side devices are not required to pre-store therein identification data identifying the wheel-side devices. Further, the body-side device and the wheel-side devices are identified on the basis of the key information, so that the accuracy of identification is improved to assure a high degree of stability to obtain the state of the desired wheel.

The present embodiment is further arranged to register the relative positions of the transceiver devices 30-36 and the respective wheel-side devices 10-16, that is, to register the initial values of the key information for the wheel-side devices, by decrementing the intensity of the information to be transmitted from each transceiver device, until the transceiver device receives the information from only the corresponding one of the wheel-side devices. This arrangement prevents erroneous registration of the key information to correlate the transceiver devices and the wheel-side devices with each other.

It will be understood from the foregoing description of the present first embodiment of the invention that a key-information transmitting portion of each wheel-side device 10, 12, 14, 16 is principally constituted by the key-information changing device 58, the wheel-information generating and transmitting portion 66 and the transceiver device 52, while a key-information transmitting portion of the body-side device 28 is principally constituted by the key-information changing portion 74, the vehicle-body-information generating and transmitting portion 84, and the transceiver devices 30-36. In the present embodiment, the key information serves as answering information and changed information.

It will also be understood that a changing portion of each sensing device in the form of each wheel-side device 10-16 is principally constituted by a portion of the information processing device 54 assigned to implement steps S2, S7 and S53, and a transmitting portion of the sensing device is principally constituted by a portion of the information processing device 54 assigned to implement steps S3, S8 and S54, while the recognizing portion 68 of each sensing device is principally constituted by a portion of the sensing device is principally constituted by a portion of the information processing device 54 assigned to implement step S52. It will further be understood that an answering-information transmitting portion of the sensing device is principally constituted by a portion of the information processing device 54 assigned to implement steps S2, S3, S7 and S8. It is also to be understood that a changing portion of the body-side device 28 is principally constituted by a portion of the information processing device 38 assigned to implement steps S25 and S73, and a transmitting portion of the body-side device is principally constituted by a portion of the information processing device 38 assigned to implement steps S26 and S73, while the recognizing portion 88 of the body-side device 28 is principally constituted by a portion of the information processing device 38 assigned to implement step S75. It will further be understood that a changed-information transmitting portion of the body-side device 28 is principally constituted by a portion of the information processing device 38 assigned to implement steps S25 and S26, and a transmission-reception-state control portion of the body-side device 28 is principally constituted by a portion of the information processing device 38 assigned to implement steps S24 and S79, and a transmission control portion of the body-side device 28 is principally constituted by a portion of the information processing device 38 assigned to implement steps S21, S22, S28 and S29, while a relative-position obtaining portion of the body-side device 28 is principally constituted by a portion of the information processing device 38 assigned to implement step S27.

In the first embodiment described above, the wheel-side devices 10-16 and the transceiver devices 30-36 of the body-side device 28 are correlated with each other, and recognized or identified, on the basis of the key information and the predetermined information changing rule. However, the recognition or identification need not be effected in both of each wheel-side device 10-16 and the body-side device 28, and may be effected in either one of the wheel-side device and the body-side device.

In the first embodiment, the information changing rule stored in the body-side device 28 and that stored in each wheel-side device 10-16 are identical with each other. However, different changing rules are used in the wheel-side device and the body-side device, provided that the rule used by the body-side device is available or known to each wheel-side device, and the rule used by each wheel-side device is available or known to the body-side device 28.

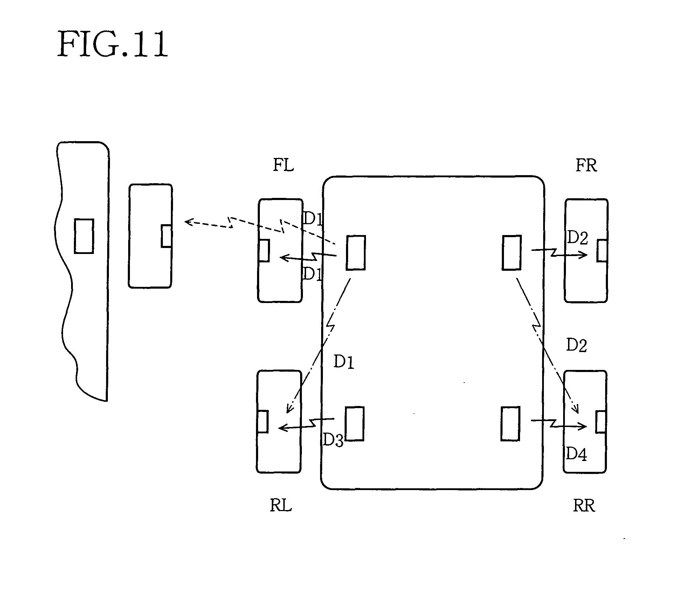

In the first embodiment, the operation in the registering mode is performed such that the key information is changed, and the changed information is transmitted. However, this arrangement is not essential. For example, key information having an initial value is transmitted from each transceiver device 30, 32, 34, 36 a predetermined number of times, as shown in Fig. 11, and the initial values are assigned to the respective wheel-side devices 10-16, on the basis of the states of reception of the key information by the wheel-side devices. In this second embodiment of the invention, the wheel-key-information memory portion 82 of the body-side device 28 stores different initial values of the key information in relation to the respective transceiver devices 30-36 corresponding to the wheel-side devices 10-16.

The information transmitted from the transceiver device 30, for example, is theoretically received by only the corresponding wheel-side device 10, but may actually be received by at least one of the other wheel-side devices 12, 14, 16. Similarly, the wheel-side device 10, for example, may receive information from at least one of the wheel-side devices 32, 34, 36. However, since the transceiver device 30 is located nearest to the wheel-side device 10, the ratio of reception of the information by wheel-side device 10 from the transceiver device 30 is the highest, and the ratios of reception of the information from the other transceiver devices 32, 34, 36 are lower than that of the information from the transceiver device 30. Therefore, the transceiver devices 30-36 can be correlated with the respective wheel-side devices 10-16, on the basis of the ratios of reception of the information of each wheel-side device from the four transceiver devices 30-36.

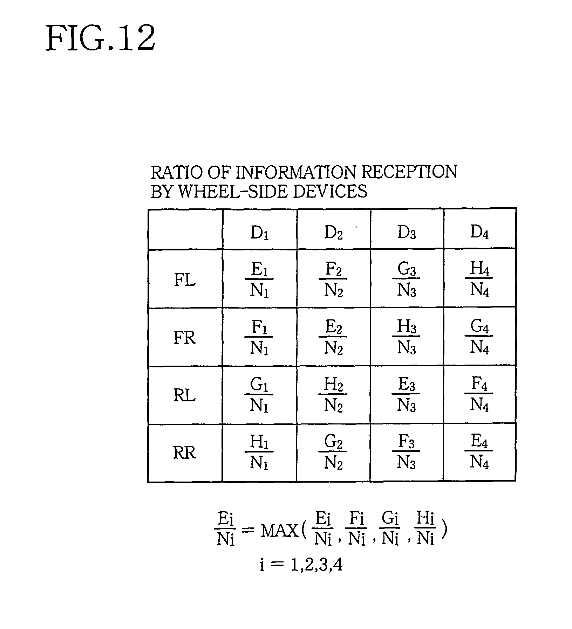

In the example of Fig. 12, information is transmitted a predetermined number of times N1, N2, N3, N4 from each of the four wheel-side devices 30-36 corresponding to the respective four wheels 20-26 (FL, FR, RL, RR). In Fig. 12, D1-D4 represent information transmitted from the respective four transceivers 30-36, and Ei, Fi, Gi and Hi (i = 1 through 4) represent the numbers of reception of the information by the wheel-side devices 10-16, respectively, so that Ei/Ni, Fi/Ni, Gi/Ni and Hi/Ni represent the ratios of reception of the information by the wheel-side devices 10-16. In this specific case, the ratio E1/N1 of reception of the information D1 from the transceiver device 30 is the highest in the wheel-side device 10, for example.

In each wheel-side device 10, 12, 14, 16, the ratio of reception of the information transmitted from each of the transceiver devices 30-36 the predetermined number of times is obtained, and the information (key information having the initial value) received by each wheel-side device with the highest reception ratio is transmitted to the body-side device 28, and this information is stored as the initial value in the key-information memory portion 64 of the wheel-side device in question.

When the body-side device 28 receives different initial values of the key information from the respective wheel-side devices 10-16, these different initial values are assigned to the respective transceiver devices 30-36, so that the wheel-side devices 10-16 are correlated with the respective transceiver devices 30-36.

If the same initial value is assigned to the two or more transceiver devices 30-36, or if no initial value was assigned to any of the transceiver devices 30-36, the above-indicated operation to assign the initial values to the transceiver devices 30-36 is repeated, by reducing the transmission intensity of the two or more transceiver devices to which the same initial value was assigned, and by increasing the transmission intensity of the transceiver device or devices to which no initial value was assigned. By repeating the operation, different initial values corresponding to the wheel-side devices 10-16 can be assigned to the respective transceiver devices 30-36 in the body-side device 28.

In the wheel-state obtaining mode, the wheel-side devices 10-16 and the transceiver devices 30-36 of the body-side device 28 are identified and correlated with each other on the basis of the initial values of the key information stored in the body-side device 28 and in each of the wheel-side devices 10-16.

The vehicle-state obtaining apparatus according to the second embodiment may be modified to correlate the wheel-side devices 10-16 with the transceiver devices 30-36, without communication of the key information therebetween. For example, the identification data of the transceiver devices 30-36 are stored in relation to the identification data of the wheel-side devices 10-16 in the registering mode. In the normal operating mode, the wheel-side devices 10-16 are correlated with the respective transceiver devices 30-36, on the basis of the stored identification data. Although the initial values of the key information are transmitted from the transceiver devices 30-36 in the second embodiment, a vehicle-state obtaining apparatus according to a third embodiment is arranged such that position data indicative of the positions of the transceiver devices 30-36 are transmitted from the transceiver devices 30-36, so that the wheel-side devices 10-16 can be correlated with the respective transceiver devices 30-36, on the basis of the position data of the transceiver devices.

In the third embodiment, the information processing device 54 of each wheel-side device 10-16 includes a position-data memory portion 200, a self-identification memory portion 202, and a reception-state-information generating portion 203, as well as the wheel-state-information generating portion 56 and wheel-information generating and transmitting portion 66 which have been described above with respect to the first embodiment of Fig. 2. On the other hand, the information processing device 38 of the body-side device 28 includes a wheel-identification memory portion 204, as well as the wheel-state obtaining portion 72, request-signal generating portion 78, self-identification memory portion 80, vehicle-body-information generating and transmitting portion 84 and transmission-reception state control portion 86, which have been described above with respect to the first embodiment.

In the third embodiment, the identification data identifying each wheel-side device 10-16 are stored in the self-identification memory portion 202 of each wheel-side device 10-16, so that the identification data are transmitted from each wheel-side device to the body-side device 28, together with the position data indicative of the position of the transceiver device of the body-side device 28 from which the position data have been received with the highest reception ratio. In the body-side device 28, the received identification data and the transceiver device specified by the received position data are stored in the wheel-identification memory portion 204, in relation to each other.

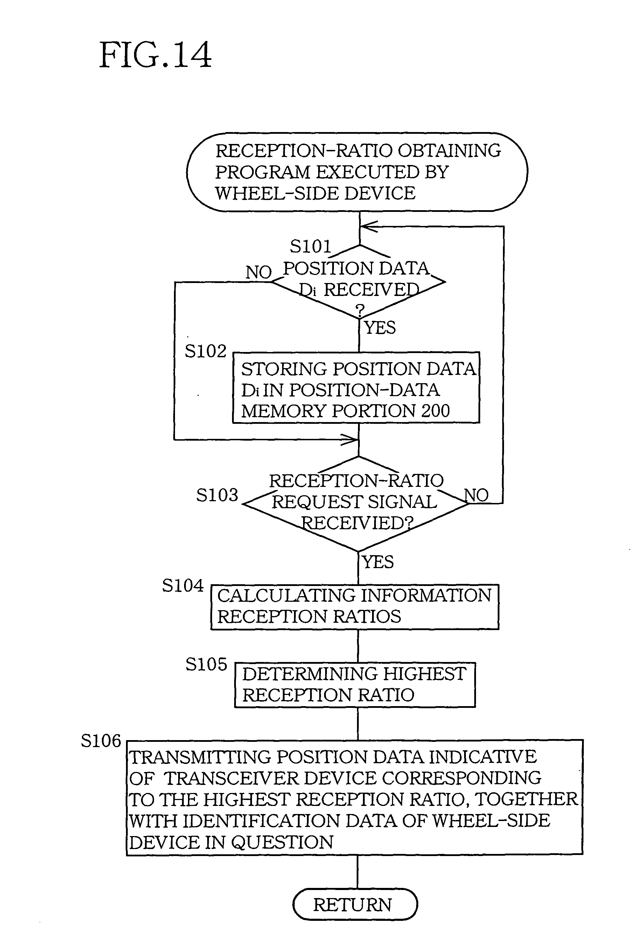

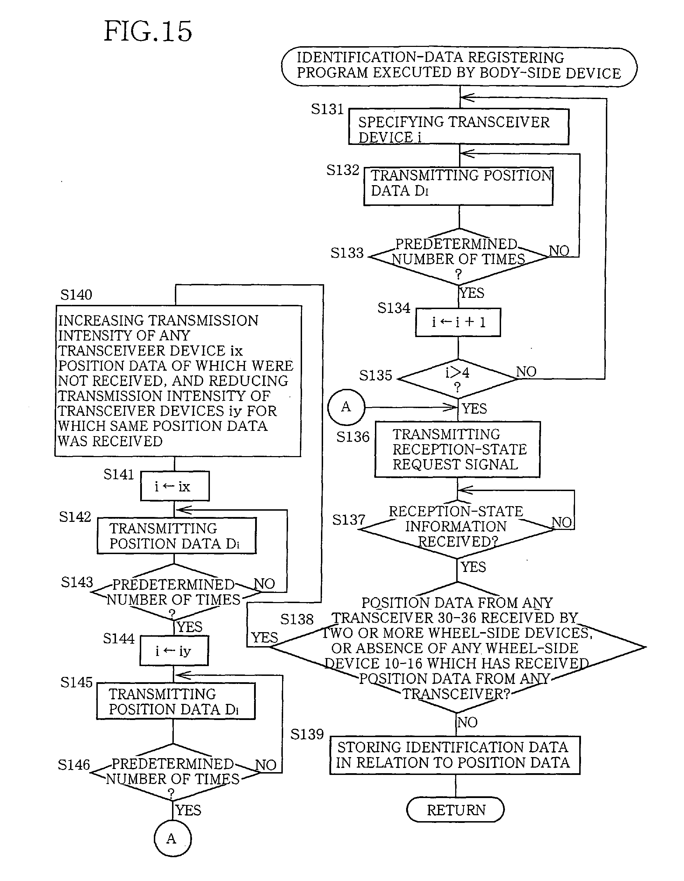

In the third embodiment, a reception-ratio obtaining program illustrated in the flow chart of Fig. 14 is executed by each wheel-side device 10, 12, 14, 16, while an identification-data registering program illustrated in the flow chart of Fig. 15 is executed by the body-side device 28.

The reception-ratio obtaining program of Fig. 15 is initiated with step S101 to determine whether position data Dᵢ have been received from the body-side device 28. If an affirmative decision (YES) is obtained in step S101, the control flow goes to step S102 in which the received position data Dᵢ are stored in the position-data memory portion 200. There are four kinds of the position data corresponding to the respective four transceiver devices 30-36. The wheel-side device may not receive all of these four kinds of the position data.

Step S102 is followed by step S103 to determine whether a reception-ratio request signal requesting the wheel-state device to transmit the reception ratio has been received from the body-side device 28. If an affirmative decision (YES) is obtained in step S103, the control flow goes to step S104 to calculate a ratio of reception of the information transmitted from each of the transceiver devices 30-36, and then to step S105 to obtain the position data indicative of the transceiver device corresponding to the highest one of the calculated reception ratios. Step S105 is followed by step S106 in which the obtained position data are transmitted, together with the identification data of the wheel-side device in question stored in the self-identification memory device 202.

The identification-data registering program of Fig. 15 is initiated with step S131 to specify the transceiver device 30 corresponding to the count 1. Step S131 is followed by steps S132 and S133 in which the position data D1 are transmitted from the specified transceiver device 30 a predetermined number of times. Then, the control flow goes to step S134 to increment the counter i to specify the next transceiver device 32, and to step S135 to determine whether the count of the counter i is larger than 4. If a negative decision (NO) is obtained, the control flow goes back to steps S132 and S133 to transmit the position data D2 from the transceiver device 32 the predetermined number of times. Thus, steps S132-S135 are repeatedly implemented until an affirmative decision (YES) is obtained in step S135, that is, until different kinds of position data Di are transmitted from the respective transceiver devices 30-36, the predetermined number of times for each kind of position data Di. When the affirmative decision is obtained in step S135, the control flow goes to step S136 to transmit a reception-state request signal from each of the transceiver devices 30-36, and to step S137 to determine whether reception-state information has been received from each of the wheel-side devices 10-16. When the reception-state information has been received from all of the wheel-side devices 10-16, an affirmative decision (YES) is obtained in step S137, and the control flow goes to step S138 to determine whether the received reception-state information indicates that the position data transmitted from any one of the transceiver devices 30-36 have been received by two or more wheel-side devices with the highest ratio of reception, or have not been received by any wheel-side device 10-16 with the highest reception ratio. If a negative decision (NO) is obtained in step S138, the control flow goes to step S139 in which the position data (indicative of the positions of the transceiver devices 30-36) and the identification data identifying the wheel-side devices 10-16 are stored in the wheel-identification memory portion 204.

If an affirmative decision (YES) is obtained in step S138, that is, if the position data transmitted from any of the transceiver devices 30-36 have been received by two or more wheel-side devices 10-16 with the highest reception ration, or have not been received by any wheel-side device with the highest reception ratio, the control flow goes to step S140 to increase the transmission intensity of any transceiver device ix the position data of which have not been received by any wheel-side device with the highest reception ratio, or reduce the transmission intensity of the transceiver device iy the position data of which have been received by two or more wheel-side devices with the highest reception ratio. Step S140 is followed by steps S141-S146 in which the position data are transmitted from each of the transceiver devices ix, iy the predetermined number of times, with the increased and reduced transmission intensity values, respectively. Then, the control flow goes to back to step S136 to transmit the reception-state request signal, and repeat the following steps.

Eventually, the different kinds of position data are received for the respective transceiver devices 30-36, so that the transceiver devices 30-36 the positions of which are indicated by the position data are correlated with the respective wheel-side devices 10-16 identified by the received identification data.

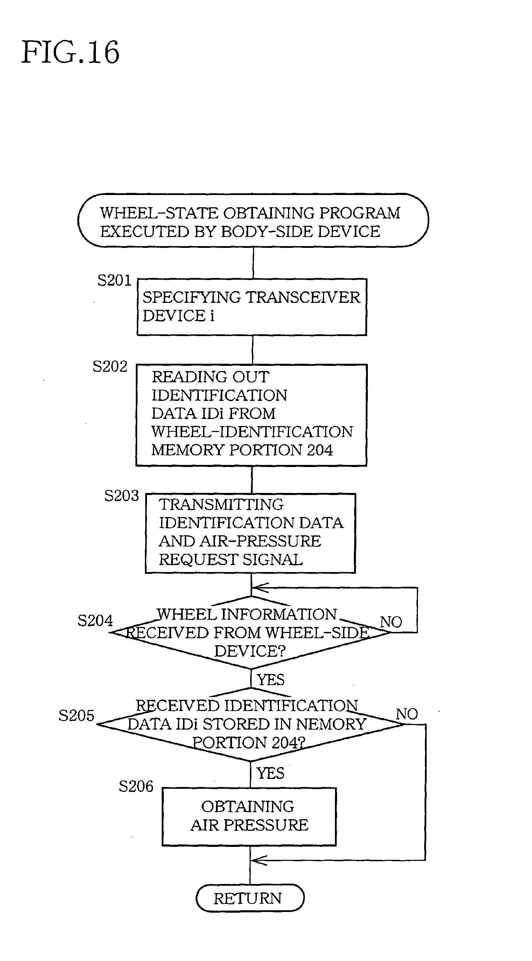

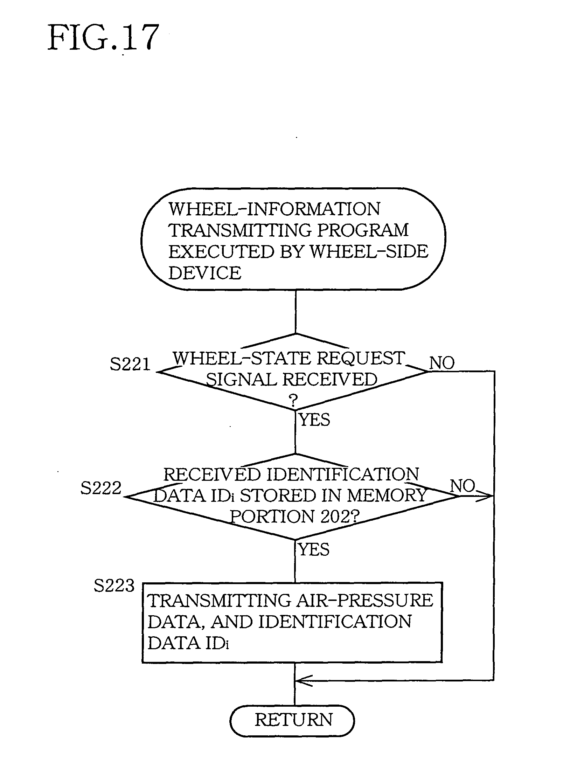

In the wheel-state obtaining mode, a wheel-state obtaining program illustrated in the flow chart of Fig. 16 is executed by the body-side device 28, while a wheel-information transmitting program illustrated in the flow chart of Fig. 17 is executed by each wheel-side device 10-16.

The wheel-state obtaining program of Fig. 16 is initiated with step S201 to specify the transceiver device i corresponding to the wheel the tire air pressure of which is to be obtained. Step S201 is followed by step S202 read out from the wheel-identification memory portion 204 the identification data IDi corresponding to the count i. Then, step S203 is implemented to transmit the identification data IDi and the wheel-state request signal.

Then, the control flow goes to step S204 to determine whether wheel information has been received from the wheel-side device 10-16 corresponding to the specified transceiver device i. If an affirmative decision (YES) is obtained in step S204, the control flow goes to step S205 to determine whether the identification data included in the received wheel information are stored in the wheel-identification memory portion 204 in relation to the specified transceiver device i. If an affirmative decision (YES) is obtained in step S205, the control flow goes to step S206 to obtain the tire air pressure on the basis of the received wheel information. If a negative decision (NO) is obtained in step S205, the tire air pressure is not obtained.

The wheel-information transmitting program of Fig. 17 is initiated with step S221 to determine whether the wheel-state request signal has been received from the body-side device 28. If an affirmative decision (YES) is obtained in step S221, the control flow goes to step S222 to determine whether the identification data IDi received with the request signal are stored in the self-identification memory portion 202. If an affirmative decision (YES) is obtained in step S222, the control flow goes to step S223 to transmit the wheel information including the air-pressure data and the identification data IDi. If a negative decision (NO) is obtained in step S222, the wheel information is not transmitted from the wheel-side device in question.

The identification data of the wheel-side device need not be transmitted from the body-side device 28, together with the wheel-state request signal. Where the identification data are not transmitted from the body-side device 28, the wheel-side device necessarily transmits the wheel information in response to the received wheel-state request signal, and the body-side device 28 recognizes that the received wheel information was transmitted from the wheel-side device identified by the identification data included in the received wheel information.

In the third embodiment, each wheel-side device 10-16 obtains the ratios of reception of the position data from the transceiver devices. However, the wheel-side devices 10-16 may be arranged to obtain the intensity of reception of the position data from each of the transceiver devices 30-36. In this case, each wheel-side device recognizes that the position data received with the highest reception intensity have been transmitted from the transceiver device indicated by that position data.

In the wheel-state obtaining mode, the position data may be used in place of or in addition to the identification data, since the position data indicative of the position of the transceiver device i also indicate the corresponding wheel-side device. For instance, the position data are transmitted from the body-side device 28, and the identification data are transmitted from each wheel-side device, or vice versa.

It will be understood from the foregoing description of the third embodiment that a reception-state-information generating portion is principally constituted by a portion of the information processing device 54 of each wheel-side device 10-16 assigned to implement steps S104 and S105, while a reception-state-information transmitting portion is principally constituted by a portion of the information processing device 54 assigned to implement step S106. It will also be understood that the relative-position obtaining portion is principally constituted by a portion of the information processing device 38 of the body-side device 28 assigned to implement steps S138 and S139, while the transmission control portion is principally constituted by a portion of the information processing device 38 assigned to implement steps S131-S136 and S140-S146.

In the third embodiment, the wheel information generated by each wheel-side device 10-16 is transmitted to the body-side device 28, and the information processing device 38 of the body-side device 28 stores reception-state information in the form of the position data, and the identification data of the wheel-side devices 10-16, such that the position data and the identification data are correlated with each other. However, this arrangement to store the position data and the identification data in relation to each other is not essential.

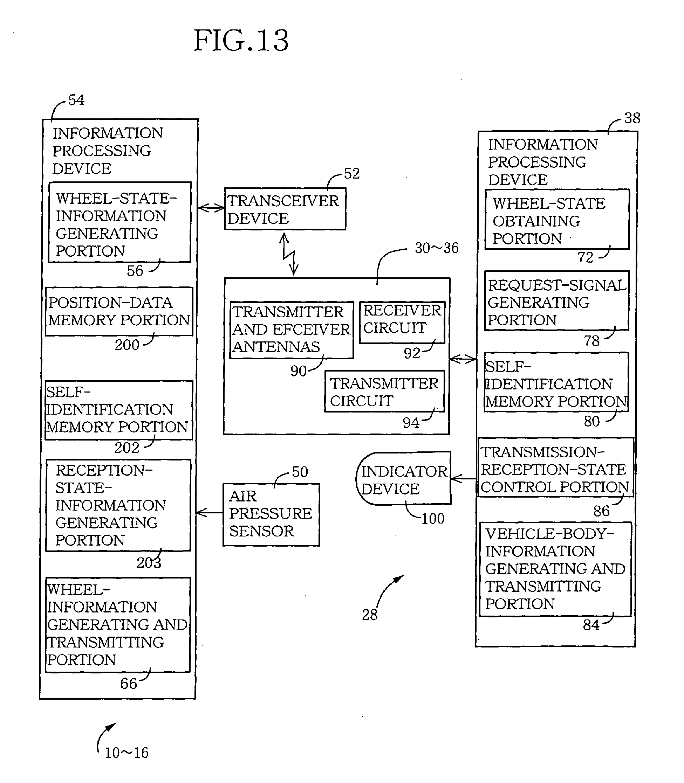

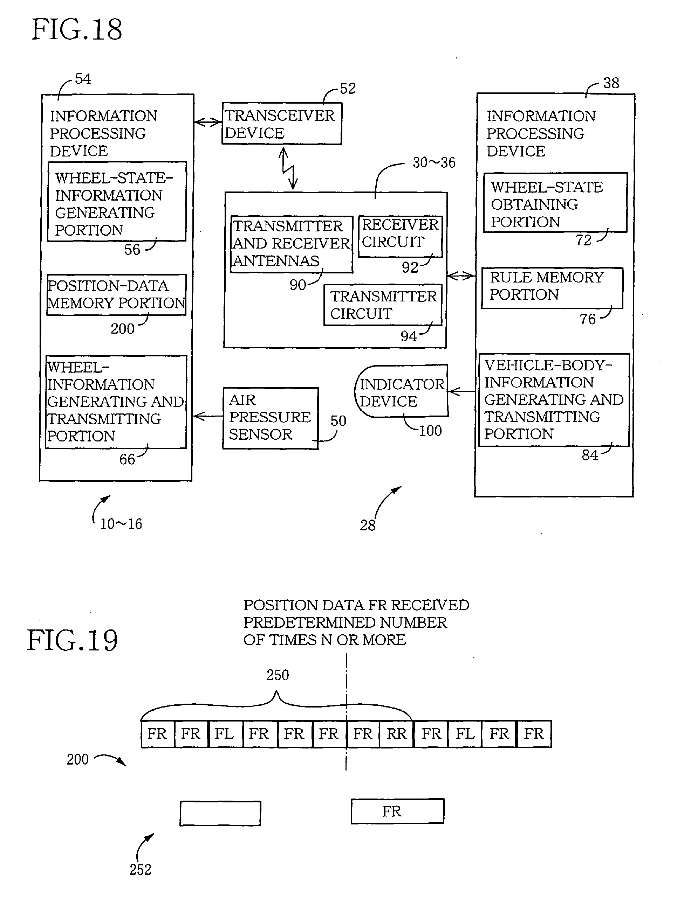

In a fourth embodiment shown in Fig. 18, a specific set of position data transmitted from one of the transceiver devices 30-36 of the body-side device 28 is stored in the corresponding wheel-side device 10-16, as the identification data or specific body-side information identifying or specifying the wheel-side device 10-16. A vehicle-state obtaining apparatus constructed according to this fourth embodiment does not include the self-identification memory portion 202 and the reception-state-information generating portion 203, which are provided in each wheel-side device 10-16 in the third embodiment of Fig. 13, and does not include the self-identification memory portion 80 and the transmission-reception-state control portion 86, which are provided in the body-side device 28 in the third embodiment.

In the fourth embodiment, the body-side device 28 is arranged such that wheel-position data indicative of the position of each vehicle wheel 20-26 relative to the vehicle body are transmitted from each transceiver device 30-36, together with the wheel-state request signal (more specifically, the air-pressure request signal).

In each wheel-side device 10-16, the wheel-position data received together with the wheel-state request signal are stored in a first memory 250 of the position-data memory portion 200, as shown in Fig. 19. When the same wheel-position data have been received a predetermined number of times N or more, the wheel-position data in question are stored in a second memory 252 of the memory portion 200, as identification data identifying the wheel-side device in question (specific body-side information specifying the corresponding vehicle wheel). The first memory 250 can store a predetermined maximum number N0 of sets of the wheel-position data.

When the position data transmitted from the body-side device 28 together with the wheel-state request signal are identical with the position data stored in the second memory 252 of the wheel-side device 10-16 in question, the wheel information including the wheel-state information and the position data) is transmitted from that wheel-side device. When the received position data are not identical with the position data stored in the second memory 252, the wheel information is not transmitted from the wheel-side device.

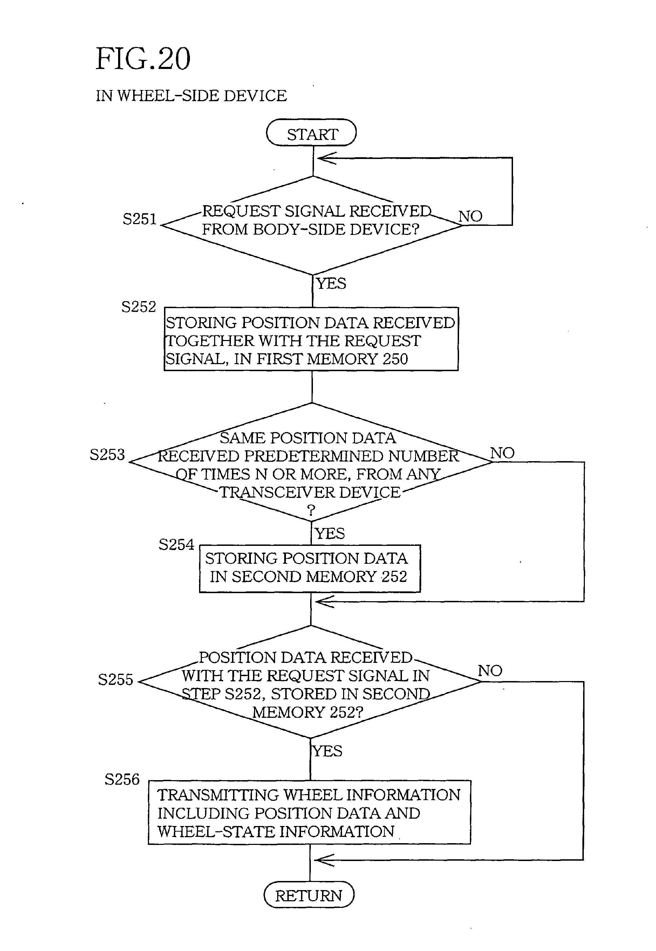

In each of the wheel-side devices 10-16, a wheel-information transmitting program illustrated in the flow chart of Fig. 20 is executed. This program is initiated with step S251 to determine whether the wheel-state request signal has been received from the body-side device 28. If an affirmative decision (YES) is obtained in step S251, the control flow goes to step S252 in which the position data received together with the wheel-state request signal are stored in the first memory 250. Step S252 is followed by step S253 to determine whether the position data of the same kind have been received the predetermined number of times N or more from any transceiver device 30-36. If an affirmative decision (YES) is obtained in step S253, step S254 is implemented to store the position data in question in the second memory 252. If a negative decision (NO) is obtained in step S253, the control flow goes to step S255 while skipping step S254. If the position data are already stored in the second memory 252, the presently received position data are stored in the second memory 252, in place of the already stored position data. If the presently received position data are identical with the already stored position data, the position data stored in the second memory 252 remain unchanged. If the presently received position data are different from the already stored position data, the already stored position data are replaced by the presently received position data. Step S254 is followed by step S255.

Step S255 is provided to determine whether the position data (identification data) received in step S252 are identical with the position data stored in the second memory 252. If an affirmative decision (YES) is obtained in step S255, the control flow goes to step S256 in which the wheel-side device in question transmits a series of wheel information including the position data and the wheel-state information, to the body-side device 28.

The position data transmitted from each transceiver device 30-36 and received by the transceiver device 52 are stored in the first memory 250. As described above, the first memory 250 can store the predetermined maximum number N0 of the position data sets. When the same position data set has been received the predetermined number of times N or more before the total number of the position data sets stored in the first memory 250 has reached the maximum number N0, the above-indicated position data are stored in the second memory 252. If any kind of position data have been received the predetermined number of times N or more, no position data are stored in the second memory 252. The position data which have been received the predetermined number of times N or more are considered to be transmitted from the transceiver device that is located nearest to the wheel-side device in question. Therefore, the position data stored in the second memory 252 remain unchanged unless the position of the corresponding wheel (wheel-side device) is changed. Although each wheel-side device may receive different kinds of position data from the respective transceiver devices, the position data stored in the second memory 252 are not changed unless the position data of the same kind have been received the predetermined number of times N or more, as described above.

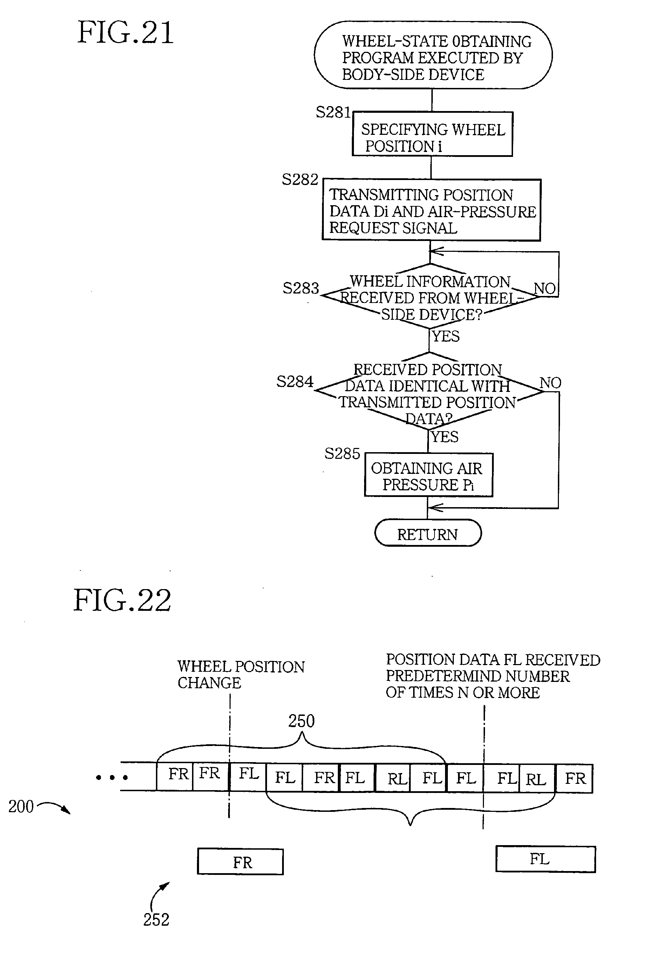

In the body-side device 28, a wheel-state obtaining program illustrated in the flow chart of Fig. 21 is executed. This wheel-state obtaining program is initiated with step S281 to specify the position of the wheel the state of which is to be obtained. Step S281 is followed by step S282 to transmit a series of vehicle-body information including the position data of the specified wheel and the wheel-state request signal (air-pressure request signal). Step S283 is then implemented to determine whether wheel information has been received from the wheel-side device corresponding to the specified wheel. If an affirmative decision (YES) is obtained in step S283, the control flow goes to step S284 to determine whether the received position data are identical with the previously transmitted position data. If an affirmative decision (YES) is obtained in step S284, the control flow goes to step S285 to obtain the wheel-state information (air-pressure data). If a negative decision (NO) is obtained in step S284, the wheel-state information is not obtained.

If the position of the wheel in question is changed, the position data stored in the second memory 252 are not changed immediately after the wheel replacement, but the position data which have been received the predetermined number of times N or more after the wheel position change are newly stored in the second memory 252, as shown in Fig. 22.

After the wheel replacement and before the position data stored in the second memory 252 are changed, the position data received from the body-side device 28 are usually different from the position data stored in the second memory 252, so that the wheel information is not transmitted. Immediately after the position data which have been received the predetermined number of times or more are newly stored in the second memory 252, the wheel information is transmitted from the wheel-side device in question.

In the present fourth embodiment described above, exclusive identification data identifying the wheel-side devices 10-16 are not pre-stored in the wheel-side devices, but the position data received from the body-side device 28 are registered as the identification data, to correctly identify the wheel-side devices 10-16 when the wheel information is obtained from the desired wheel-side devices.

The wheel position data indicative of the position of each wheel relative to the vehicle body are stored in the corresponding wheel-side device 10-16, so that a need of distinguishing the wheel-side devices from each other is reduced. Where the right front wheel 22 of the vehicle in question is located relatively adjacent to the left front wheel of an adjacent vehicle, the wheel-side device 12 corresponding to the right front wheel 22 of the vehicle in question is prevented from responding to the wheel-state request signal transmitted from the wheel-side device corresponding to the left front wheel of the adjacent vehicle. Where the wheel-side devices of different vehicles are distinguished from each other, by using the identification data identifying those wheel-side devices, the volume of the identification data required to correctly distinguish the wheel-side devices increases with an increase in the number of the wheel-side devices that should be distinguished from each other. An increase in the required volume of the identification data results in an increase in the time required for obtaining the wheel information. In the present fourth embodiment wherein the possibility of erroneous detection of the wheel information is relatively low, without distinguishing the wheel-side devices from each other, the need of increasing the volume of the position data used as the identification data is relatively low, so that the required time for obtaining the wheel information is accordingly shortened.

In the fourth embodiment described above, the position data transmitted from the body-side device 28 are processed in each of the wheel-side devices 10-16, in both of the registering mode and the wheel-state obtaining mode. However, the registering mode may be established to transmit the position data a predetermined number of times from each of the transceiver devices 30-36 of the body-side device 28, and store the position data in the second memory 252, on the basis of the ratio or intensity of reception of the position data. That is, the position data which have been received with the highest ratio or intensity of reception are stored in the second memory 252. In this modified arrangement, the registering mode is established after the installation of each wheel, and after the wheel replacement, to register the identification data in the form of the position data. Then, the wheel-state obtaining mode is established. The wheel information (wheel-state information) can be obtained immediately after the wheel-state obtaining mode is established.

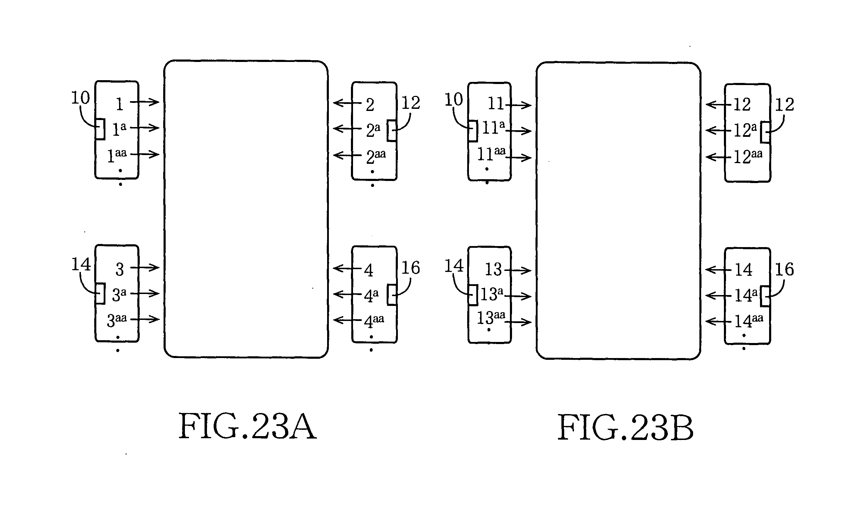

While the fourth embodiment is arranged such that the wheel-side devices 10-16 are correlated with the positions of the corresponding wheels 20-26 relative to the vehicle body, this arrangement is not essential, provided the body-side device 28 can recognize the wheel-side devices 10-16 provided for the corresponding vehicle. In a sixth embodiment of Figs. 23A and 23B, key information is transmitted from each of the wheel-side devices 10-16 a predetermined number of times, while the key information to be transmitted is changed according to a predetermined information changing rule. The body-side device 28 which has received the key information obtains the information changing rule and initial values of the key information which are stored in each wheel-side device 10-16.

Each of the wheel-side devices 10-16 may be arranged to change the initial value of the key information, in two steps, for example, from the value indicated in Fig. 23A to the value indicated in Fig. 23B. The initial value is changed from a first value to a second value, according to a predetermined rule, after the key information is transmitted a predetermined number of times using the first initial value. After the initial value is changed to the second value, the key information is transmitted a predetermined number of time using the second initial value.

This arrangement to change the initial value of the key information is applicable to the first and second embodiments.

Where different kinds of key information are received by the transceiver devices 30-36, the wheel-side devices 10-16 which have transmitted the key information and the transceiver devices 30-36 (their positions) can be correlated with each other.

Where the wheel-side devices 10-16 are arranged to be able to obtain the absolute positions of the corresponding wheels 20-26 in a coordinate system common to all of the wheels, the body-side device 28 can obtain the positions of the wheel-side device 10-16 relative to the vehicle body on the basis of the obtained absolute positions of the wheels.

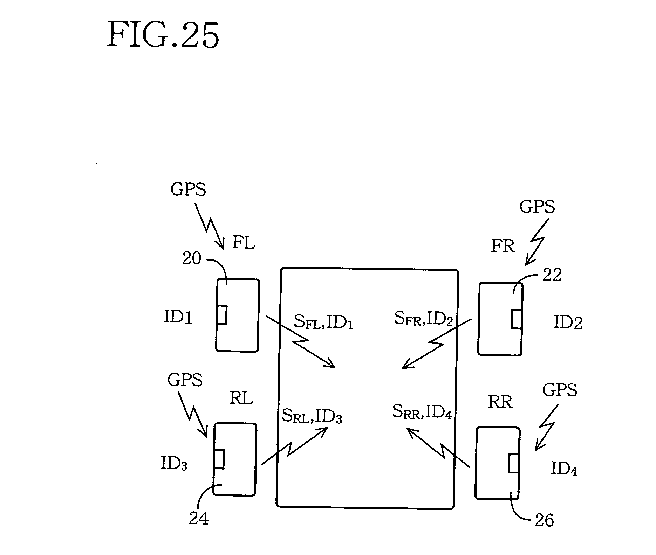

In a sixth embodiment, position data S indicative of the absolute positions of each wheel 20-26 before and after a movement of the vehicle are transmitted from the corresponding wheel-side device 10-16, together with identification data IDᵢ identifying the wheel-side devices, as indicated in Fig. 25. The body-side device 28 obtains the positions of the wheels 20-26 relative to the vehicle body, on the basis of the absolute positions of the wheels 20-26 indicated by the received position data. Thus, the positions of the wheel-side devices 10-16 relative to the vehicle body are correlated with their identification data.

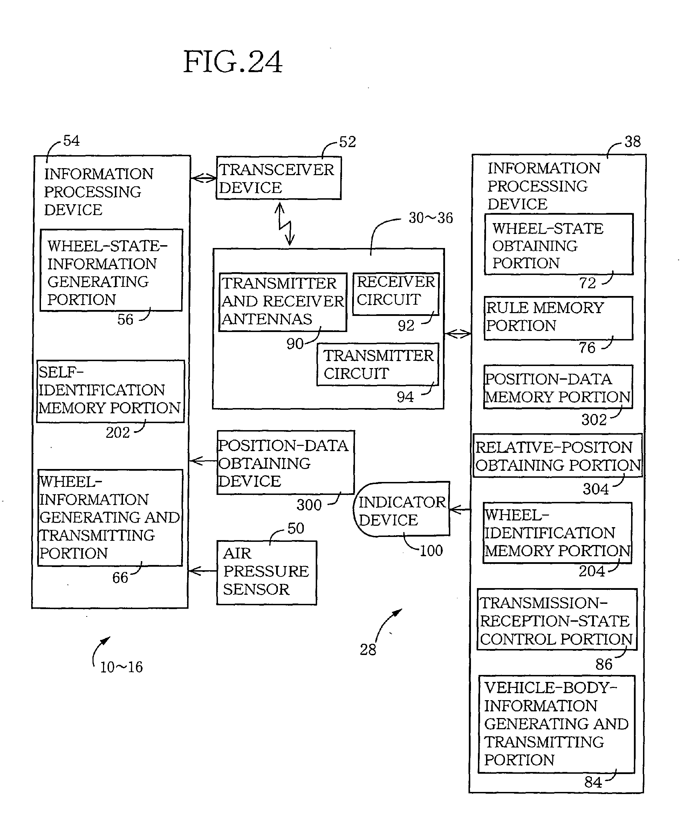

In the sixth embodiment, each wheel-side device 10-16 includes a position-data obtaining device 300, as shown in Fig. 24. The position-data obtaining device 300 includes a receiver operable to receiver information from an earth satellite. The transceiver device 52 may be used as the receiver. On the other hand, the information processing device 38 of the body-side device 28 includes a position-data memory portion 302 and a relative-position obtaining portion 304.

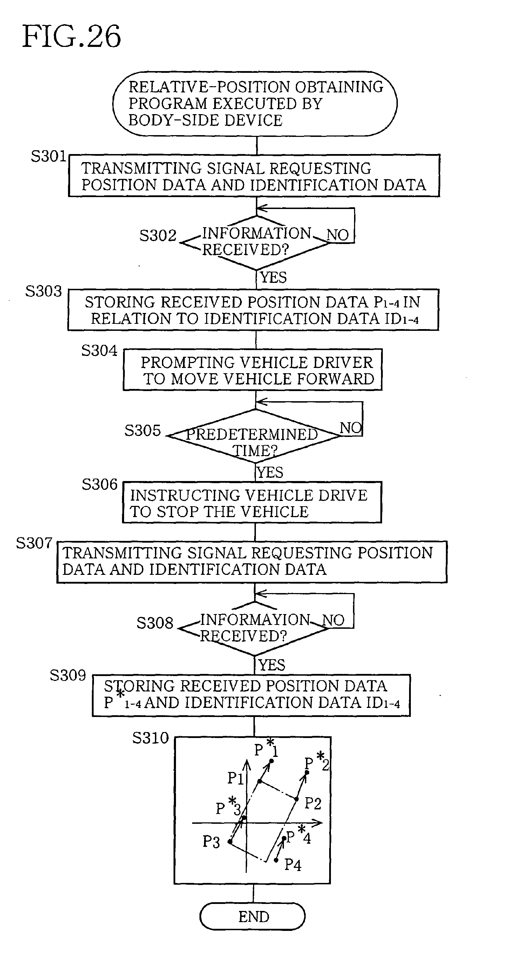

The body-side device 28 is arranged to execute a relative-position obtaining program illustrated in the flow chart of Fig. 26. This program is initiated with step S301 to transmit a signal requesting each wheel-side device 10-16 to transmit the position data P₁₋₄ and identification data ID₁₋₄. Step S301 is followed by step S302 to determine whether the position data and identification data have been received from the wheel-side devices 10-16. If an affirmative decision (YES) is obtained in step S302, the control flow goes to step S303 to store the position data P₁₋₄ in the position-data memory portion 302, in relation to the identification data ID₁₋₄. Step S303 is followed by step S304 to prompt the operator of the vehicle to move the vehicle forward, by generating a suitable message or providing a suitable indication on a display panel in front of an operator's seat of the vehicle. Then, the control flow goes to step S304 to determine whether a predetermined time has passed after the starting of the vehicle. If an affirmative decision (YES) is obtained in step S305, the control flow goes to step S306 to prompt the vehicle operator to stop the vehicle movement. Then, step S307 is implemented to transmit the signal requesting the wheel-side devices 10-16 to transmit the position data P*₁₋₄and identification data ID₁₋₄. Step S307 is followed by step S308 to determine whether the position data and identification data have been received from the wheel-side devices 10-16. When an affirmative decision (YES) is obtained in step S308, the control flow goes to step S309 to store the position data in the position-data memory portion 302. Then, step S310 is implemented to obtain the positions of the wheels 20-26 relative to the vehicle body in the longitudinal and lateral directions of the vehicle, on the basis of the position data obtained in steps S303 and S309.

If a distance the position of one of the front and rear left wheels before the forward movement of the vehicle and the position of the other of the front and rear wheels after the forward movement is smaller than a distance between the front and rear left wheels, for example, the above-indicated one wheel can be determined to be the left front wheel, while the other wheel can be determined to be the left rear wheel.

Thus, the wheel positions in the common coordinate system and the identification data can be correlated with each other, by utilizing information received from a global positioning satellite (GPS) used by a vehicle navigation system.

It will be understood from the foregoing description of the present sixth embodiment that the relative-position obtaining portion is principally constituted by a portion of the information processing device 38 of the body-side device 28 assigned to implement steps S303, S309 and S310.

The sixth embodiment may be modified to move the vehicle backward in step S304. The positions of the wheels 20-26 relative to the vehicle body can be obtained on the basis of the position data obtained before and after the vehicle movement, irrespective of the direction of the movement, provided the direction of the movement is known to the body-side device 28.

The registration of the wheel-side devices in relation to the transceiver devices, and the confirmation or inspection of the identification data may be effected during a normal running of the vehicle.

While the illustrated embodiments described above are arranged to change the transmission intensity or reception sensitivity of the transceiver devices 30-36 of the body-side device 28 in the registering mode, the operation in the registering mode is not limited to this arrangement. For example, the registration can be made by changing the frequency of the information to be transmitted from each transceiver device, the number of key information sets to be transmitted, or the frequency of transmission of the key information. A change in the frequency increases the probability of reception of the information by the wheel-side devices. Alternatively, the condition of transmission or reception of the transceiver device 52 of each wheel-side device may be changed.

Although the illustrated embodiments are arranged to change the contents of the information according to the predetermined information changing rule, the frequency, transmission intensity or length (volume) of the information may be changed according to a predetermined changing rule, provided that the changing rule is available or known to both the body-side device and the wheel-side devices.

In the illustrated embodiments, each wheel-side device is provided with the air pressure sensor 50 to detect the wheel state in the form of the tire air pressure. However, each wheel-side device may be provided with a temperature sensor to detect the temperature of the corresponding wheel as the wheel state, or may alternatively be provided with a force sensor arranged to detect a force acting on the corresponding wheel in the vertical, lateral or longitudinal direction of the vehicle, or a speed sensor arranged to detect the rotating speed of the corresponding wheel, so that wheel-state information indicated of the detected force or speed is transmitted to the body-side device.

While the sensing devices in the form of the wheel-side devices 10-16 are provided on the respective wheels in the illustrated embodiments, the sensing devices may be provided on other portions of the vehicle. For example, each sensing device include a sensor arranged to detect a force acting on a suspension arm of the vehicle, or any other sensor disposed at a location at which electrical connection of the sensor to the body-side device by signal wires is impossible or difficult. The sensing devices may be provided on unsprung members of the vehicle.

It is to be understood that the present invention may be embodied with various other changes and improvements, such as those described above in the SUMMARY OF THE INVENTION, which may occur to those skilled in the art.

## Claims

1. A vehicle-state obtaining apparatus comprising (a) a sensing device (10-16) including at least one sensor (50) to detect a state of at least a portion of a vehicle, and operable to transmit, by radio communication, sensor information including the state detected by said at least one sensor, and (b) an information processing device (38) operable to receive said sensor. information and obtain the state of the vehicle on the basis of the received sensor information, **characterized in that**:
said information processing device (38) comprises an initiating portion which initiates an operation to obtain the state of the vehicle when it is recognized by one-way or two-way communication of key information between said sensing device (10-16) and said information processing device that the sensing device and the information processing device correspond to each other.

2. The vehicle-state obtaining apparatus according to claim 1, wherein at least one of said sensing device and said information processing device includes a key-information transmitting portion which changes at least one of a previously transmitted set of key information and a presently received set of key information according to a predetermined information changing rule, and transmits the changed set of key information.

3. The vehicle-state obtaining apparatus according to claim 2, wherein at least one of said sensing device and said information processing device includes a recognizing portion (68, 88) operable to recognize, on the basis of at least said predetermined information changing rule, that said sensing device and said information processing device correspond to each other.

4. The vehicle-state obtaining apparatus according to claim 3, wherein said initiating portion initiates the operation to obtain the state of the vehicle when said recognizing portion has recognized that said sensing device and the information processing device correspond to each other.

5. The vehicle-state obtaining apparatus according to any one of claims 1-4, wherein each of said sensing device and said information processing device includes a receiving portion (38, 52, S1, S5, S23, S51, S74) operable to receive the key information, a changing portion (58, 74) operable to change the received key information according to a predetermined information changing rule, and a transmitting portion (38, 52, S3, S8, S26, S54, S73) operable to transmit the key information changed by said changing portion.

6. The vehicle-state obtaining apparatus according to claim 5, wherein said changing portion (58) of said sensing device and said changing portion (74) of said information processing device change the key information according to predetermined information changing rules which are known to both of the changing portions of said sensing device and said information processing device.

7. The vehicle-state obtaining apparatus according to claim 5 or 6, wherein said changing portion (56) of said sensing device and said changing portion (74) of said information processing device change the key information according to a predetermined same information changing rule.

8. The vehicle-state obtaining apparatus according to any one of claims 3-7, wherein said information processing device includes said recognizing portion (88), and is operable to obtain the state of the vehicle on the basis of said sensor information, when said recognizing portion has recognized that the sensing device and the information processing device correspond to each other, said information processing device being inoperable to obtain the state of the vehicle when said recognizing portion has not recognized that the sensing device and the information processing device correspond to each other.

9. The vehicle-state obtaining apparatus according to claim 8, wherein said sensing device (10-16) includes said key-information transmitting portion, and a sensor-information transmitting portion (54, S54) operable to transmit said sensor information together with said changed set of key information.

10. The vehicle-state obtaining apparatus according to any one of claims 3-9, wherein said sensing device (10-16) includes said recognizing portion (68), and is operable to transmit said sensor information, when said recognizing portion has recognized that the sensing device and the information processing device correspond to each other, said sensing device being inoperable to transmit said sensor information, when said recognizing portion has not recognized that the sensing device and the information processing device correspond to each other.

11. The vehicle-state obtaining apparatus according to claim 10, wherein said information processing device (38) includes said key-information transmitting portion, and a request-signal transmitting portion (38, S73) operable to transmit, together with said changed set of key information, a request signal requesting said sensing device to transmit said sensor information.

12. The vehicle-state obtaining apparatus according to any one of claims 3-11, wherein said sensing device includes said key-information transmitting portion, and a changing portion (54, S2, S7, S53) operable to change a previously transmitted set of key information according to said predetermined information changing rule, and transmit the changed set of key information, and said information processing device includes said recognizing portion, sad recognizing portion recognizing, on the basis of at least a plurality of sets of key information received from said sensing device, that the sensing device corresponds to said information processing device.

13. The vehicle-state obtaining apparatus according to any one of claims 3-12, wherein said sensing device includes said key-information transmitting portion, and a changing portion (54, S2, S7, S53) operable to change a previously transmitted set of key information according to said predetermined information changing rule, and transmit the changed set of key information, and said information processing device includes a rule-obtaining portion operable to obtain the predetermined information changing rule used by said changing portion of said sensing device, on the basis of a plurality of sets of key information received from said sensing device.

14. The vehicle-state obtaining apparatus according to any one of claims 1-13, wherein said sensing device (10-16) is provided on each of a plurality of wheels (20-26) of said vehicle, and said at least one sensor includes at least one sensor (50) operable to detect a state of the corresponding wheel, said senor information transmitted by said sensing device including the detected state of said corresponding wheel.

15. The vehicle-state obtaining apparatus according to claim 14, wherein said information processing device (38) is provided on a body of said vehicle, and includes a wheel-state obtaining portion (72) operable to obtain the state of said corresponding wheel on the basis of said sensor information transmitted from said sensing device.

16. A vehicle-state obtaining device comprising (a) a plurality of wheel-side devices (10-16) provided on a plurality of wheels (20-26) of a vehicle, respectively, each of said wheel-side devices including at least one sensor (50) to detect a state of a corresponding one of said wheels, said each wheel-side device being operable to transmit wheel information including the state of said corresponding wheel detected by said at least one sensor, and (b) a body-side device (28) provided on a body of the vehicle and including an information processing device (38) operable to obtain the states of said plurality of wheels on the basis of said wheel information transmitted by said plurality of wheel-side devices, wherein two-way communication of information is effected between said plurality of wheels-side devices and said body-side device, **characterized in that**:
said body-side device (28) includes a plurality of body-side transmitting portions (30-36) which are provided for said plurality of wheels (20-26), respectively, and which transmit respective different kinds of information;
each of said plurality of wheel-side devices (10-16) includes a reception-state obtaining portion (52, 200) operable to obtain a state of reception of at least one of said different kinds of information transmitted by at least one of said body-side transmitting portions (30-36); and
one of said information processing device and said each wheel-side device includes a specific-information obtaining portion (38; 200, 203; 200) operable to obtain specific information indicative of said each wheel-side device, on the basis of said state of reception obtained by said reception-state obtaining portion.

17. The vehicle-state obtaining apparatus according to claim 16, wherein each of said plurality of wheel-side devices (10-16) includes a reception-state-information transmitting portion (54, S106) operable to generate reception-state information indicative of the state of reception obtained by said reception-state obtaining portion and to transmit the generated reception-state information, and said specific-information obtaining portion (38) is provided on said information processing device (38) and includes a relative-position obtaining portion (38, S138, S139) operable to obtain, as said specific information, information indicative of a position of each of said wheel-side devices (10-16) relative to the body of the vehicle, on the basis of said reception-state information transmitted from said reception-state-information transmitting portion (54, S106).

18. The vehicle-state obtaining apparatus according to claim 16 or 17, wherein each of said wheel-side devices (10-16) includes a receiving portion (52) operable to receive the information from at least one of said body-side transmitting portions (30-36), a received-information memory portion (200) for storing the information received by said receiving portion, and a reception-state-information generating portion (203, S104, S105) operable to generate said reception-state information on the basis of the information stored in said received-information memory portion, said reception-state-information transmitting portion (54, S106) transmitting said reception-state information generated by said reception-state-information generating portion.

19. The vehicle-state obtaining apparatus according to any one of claims 16-18, wherein each of said wheel-side devices (10-16) includes an identification-data transmitting portion (66) operable to transmit identification data identifying said each wheel-side device, such that said identification data are transmitted together with said reception-state information transmitted by said reception-state-information transmitting portion.

20. The vehicle-state obtaining apparatus according to any one of claims 16-19, wherein said information processing device (38) of said body-side device includes a transmission control portion (S131-S136, S140-S146) operable to control at least one of said body-side transmitting portions (30-36), on the basis of said reception-state information transmitted by said reception-state-information transmitting portion (54, S106) of said each wheel-side device.

21. The vehicle-state obtaining apparatus according to claim 20, wherein said transmission control portion includes a transmission-state changing portion (S140) operable to change at least one of a transmission intensity of said at least one body-side transmitting portion; a frequency of the information to be transmitted from said at least one body-side transmitting portion; a pattern of transmission of the information from each of said at least one body-side transmitting portion; and a frequency at which the information is transmitted by each of said at least one body-side transmitting portion.

22. The vehicle-state obtaining apparatus according to claim 20 or 21, wherein each of said plurality of wheel-side devices further includes a highest-reception-ratio-information generating portion (54, S104, S105) operable to generate, as said reception-state information to be transmitted by said reception-state-information transmitting portion (54, S106), highest-reception-ratio information indicating one of said different kinds of information which has been received by said each wheel-side device with a highest ratio of reception among said different kinds, said information processing device of said body-side device further including a transmission-intensity control portion (38, S140) which is operable, when said highest-reception-ratio information indicates that any one of said different kinds of information has been received with the highest ratio of reception by at least two of said wheel-side devices, to reduce a transmission intensity of one of said body-side transmitting portions which has transmitted said any one of said different kinds of information, said transmission-intensity control portion being further operable, when said highest-reception-ratio information indicates that any one of said different kinds of information has not been received with the highest ratio of reception by any of said wheel-side devices, to increase a transmission intensity of one of said body-side transmitting portions which has transmitted said any one of said different kinds of information which has not been received with the highest ratio of reception by any of the wheel-side devices.

23. The vehicle-state obtaining apparatus according to any one of claims 16-22, wherein each of said wheel-side devices (10-16) obtains a ratio of reception of each of said at least one of said different kinds of information transmitted by said at least one of said body-side transmitting portions (30-36), and includes a received-information memory portion (54, S105) for storing one of said different kinds of information which has been received with a highest ratio of reception by said each wheel-side device among said different kinds.

24. The vehicle-state obtaining apparatus according to claim 16, wherein each of said plurality of wheel-side devices (10-16) obtains, as said specific information, specific body-side information on the basis of the state of reception detected by said reception-state obtaining portion, said specific body-side information consisting of a specific one of said different kinds of information which has been transmitted from a corresponding one of said plurality of body-side transmitting portions,
and wherein said each wheel-side device includes a specific-body-side-information memory portion (200, 252) for storing said specific body-side information.

25. The vehicle-state obtaining apparatus according to claim 24, wherein said plurality of body-side transmitting portions include respective wheel-position-data transmitting portions operable to transmit respective different kinds of wheel position data indicative of respective positions of said plurality of wheels (20-26) relative to said body of the vehicle, and said specific-body-side-information memory portion (200) of said each wheel-side device includes a wheel-position-data memory portion for storing one of said different kinds of wheel position data which is determined as identification data identifying said each wheel-side device, on the basis of a state of reception of at least one of said different kinds of wheel position data transmitted by at least one of said body-side transmitting portions.

26. The vehicle-state obtaining apparatus according to claim 24 or 25, wherein each of said plurality of wheel-side devices (10-16) includes a received-information memory portion (250) operable to store a predetermined maximum number of sets of said different kinds of information transmitted from said body-side transmitting portions (30-36), and a specific-body-side-information determining portion (S253, S254) operable to determine said specific body-side information on the basis of the sets of said different kinds of information stored in said received-information memory portion.

27. The vehicle-state obtaining apparatus according to any one of claims 24-26, each of said plurality of wheel-side devices (10-16) includes an identification-data obtaining portion (S251-S254) operable to determine, as identification data identifying said each wheel-side device, one of said different kinds of information which has been transmitted from a corresponding one of said plurality of body-side transmitting portions.

28. A vehicle-state obtaining apparatus comprising (a) a plurality of wheel-side devices (10-16) provided on a plurality of wheels (20-26) of a vehicle, respectively, each of said wheel-side devices including a sensor (50) to detect a state of a corresponding one of said wheels, said each wheel-side device being operable to transmit wheel information including the state of said corresponding wheel detected by said sensor, and (b) a body-side device (28) provided on a body of the vehicle and including an information processing device (38) operable to obtain the states of said plurality of wheels on the basis of said wheel information transmitted by said plurality of wheel-side devices, wherein two-way communication of information is effected between said plurality of wheel-side devices and said body-side device, **characterized in that**:
said body-side device (28) includes a plurality of body-side transceiver portions (30-36) which are provided for said plurality of wheels (20-26), respectively, and a transmission control portion (38, S21, S22, S28, S29) operable to sequentially operate said plurality of body-side transceiver portions such that when information is transmitted by each one of said body-side transceiver devices, no information is transmitted by the other of said body-side transceiver devices;
each of said plurality of wheel-side devices (10-16) includes an answering-information transmitting portion (54, S2, S3, S7, S8) operable to transmit answering information corresponding to the information received from said body-side transceiver portions; and
said information processing device (38) of said body-side device includes a relative-position obtaining portion (S27) operable to obtain a position of each of said wheel-side devices (10-16) relative to the body of the vehicle on the basis of said answering information as received from said answering-information transmitting portion.

29. The vehicle-state obtaining apparatus according to claim 28, wherein said information processing device (38) of said body-side device (28) includes a transmission-reception-state control portion (86, S24, S79) operable when said information processing device has received said answering information from at least two devices of said plurality of wheel-side devices (10-16) in response to the information transmitted from one of said body-side transceiver portions (30-36), said transmission-reception-state control portion reducing at least one of a transmission intensity and a reception sensitivity of said one body-side transceiver portion, until said information processing device receives the answering information from only one of said plurality of wheel-side devices.

30. The vehicle-state obtaining apparatus according to claim 29, wherein said transmission-reception-state control portion gradually reduces at least one of said transmission intensity and said reception sensitivity of said one body-side transceiver portion.

31. The vehicle-state obtaining apparatus according to any one of claims 28-30, wherein said answering-information transmitting portion is operable to change the information received from each of said body-side transceiver portions, into said answering information, according to a predetermined information changing rule, and said information processing device of said body-side device includes a changed-information transmitting portion (S25, S26) operable to change said answering information according to a predetermined information changing rule and transmit the changed answering information.

32. The vehicle-state obtaining apparatus according to claim 31, wherein said information processing device of said body-side device includes an answering-information memory portion (82, S27) operable when said information processing device has received said answering information from only one of said plurality of wheel-side devices (10-16) in response to the information transmitted from one of said body-side transceiver portions (30-36), said answering-information memory portion storing therein the received answering information in relation to said one body-side transceiver portion.

33. The vehicle-state obtaining apparatus according to claim 32, wherein at least one of each of said plurality of wheel-side devices and said information processing device includes an answering-information-transmission inhibiting portion which is operable, when said answering information has been stored in said answering-information memory portion, to inhibit subsequent transmission of the answering information from said one wheel-side device.

34. The vehicle-state obtaining apparatus according to claim 28, wherein said body-side device (28) includes a request-signal transmitting portion (38, 84, S73, S203, S282) operable to transmit, through said body-side transceiver portions (30-36), different kinds of specifying information corresponding to said plurality of wheel-side devices (10-16), respectively, and a request signal requesting each of said wheel-side devices to transmit said wheel information,
and wherein each of said plurality of wheel-side devices (10-16) further includes a wheel-information transmitting portion (52, 54, 66, S54, S223) operable to transmit said wheel information when one of said different kinds of specifying information which has been received by said each wheel-side device from said request-signal transmitting portion specifies said each wheel-side device, said wheel-information transmitting portion being inoperable when said one kind of specifying information does not specify said each wheel-side device.

35. A vehicle-state obtaining apparatus comprising (a) a plurality of wheel-side devices (10-16) provided on a plurality of wheels (20-26) of a vehicle, respectively, each of said wheel-side devices including at least one sensor (50) to detect a state of a corresponding one of said wheels, said each wheel-side device being operable to transmit wheel information including the state of said corresponding wheel detected by said at least one sensor, and (b) a body-side device (28) provided on a body of the vehicle and including an information processing device (38) operable to obtain the states of said plurality of wheels on the basis of said wheel information transmitted by said plurality of wheel-side devices, **characterized in that**:
each of said plurality of wheel-side devices (10-16) includes a positional-information obtaining portion (300) operable to obtain positional information relating to a position of a corresponding one of said plurality of wheels (20-26) in a coordinate system common to all of said plurality of wheels, and a positional-information transmitting portion (52) operable to transmit said positional information obtained by said positional-information obtaining portion.

36. The vehicle-state obtaining apparatus according to claim 35, wherein said body-side device includes a relative-position obtaining portion (304) operable to obtain a position of each of said wheels relative to said body of the vehicle, on the basis of the positional information received from a corresponding one of said plurality of wheel-side devices before a movement of the vehicle in said coordinate system and the positional information received from said corresponding wheel-side device after said movement.
